# EUROPÄISCHE PATENTSCHRIFT

(11) **EP 2 900 039 B1**
(45) Veröffentlichungstag und Bekanntmachung des Hinweises auf die Patenterteilung: **04.11.2020**
(21) Anmeldenummer: 14152709.3
(22) Anmeldetag: 27.01.2014
(51) Int. Cl.: H05B 33/08

(54) **Leuchtmittel und hiermit ausgestattete Kraftfahrzeugleuchte sowie Verfahren zu deren Betrieb**
Luminaire and motor vehicle light equipped with same and method for the operation thereof
Ampoule, phare de véhicule automobile équipé de celle-ci et son procédé de fonctionnement

(43) Veröffentlichungstag der Anmeldung: 29.07.2015
(73) Patentinhaber: odelo GmbH, 70329 Stuttgart (DE)
(72) Erfinder: Schwegler, Veit, 70372 Stuttgart (DE); Vollmer, Marco, 71332 Waiblingen (DE)
(74) Vertreter: Benninger, Johannes

(56) Entgegenhaltungen:
- DE-A1-102012 006 315
- US-A1- 2013 328 491

## Beschreibung

Die Erfindung betrifft zumindest: ein Leuchtmittel mit mindestens zwei OLEDs als Lichtquelle gemäß dem Oberbegriff des Anspruchs 1 und eine mit mindestens einem derartigen Leuchtmittel ausgestattete Kraftfahrzeugleuchte gemäß dem Oberbegriff des Anspruchs 9 sowie ein Verfahren zum Betrieb mindestens eines derartigen Leuchtmittels und/oder einer mit wenigstens einem solchen Leuchtmittel ausgestatteten Kraftfahrzeugleuchte gemäß dem Oberbegriff des Anspruchs 12.

Eine typische Kraftfahrzeugleuchte umfasst einen im Wesentlichen von einem Leuchtengehäuse und einer Lichtscheibe umschlossenen Leuchteninnenraum und mindestens ein darin beherbergtes, mindestens eine Lichtquelle umfassendes Leuchtmittel für wenigstens eine Lichtfunktion der Kraftfahrzeugleuchte.

Jede Kraftfahrzeugleuchte erfüllt je nach Ausgestaltung eine oder mehrere Aufgaben bzw. Funktionen. Zur Erfüllung jeder Aufgabe bzw. Funktion ist eine Lichtfunktion der Kraftfahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Tag und/oder Nacht, wie etwa bei einer Ausgestaltung als Heckleuchte oder Tagfahrleuchte. Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Für die einzelnen Lichtfunktionen sind zum Teil unterschiedliche Helligkeiten bzw. Sichtweiten sowie zum Teil unterschiedliche Lichtfarben zugeordnet.

Wenigstens einer Lichtquelle des Leuchtmittels einer Kraftfahrzeugleuchte können ein oder mehrere zur Ausformung einer Lichtverteilung beitragende Optikelemente zur Lichtlenkung zugeordnet sein.

Die Lichtscheibe ist durch eine heutzutage meist aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Beispiele für Kraftfahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Als Lichtquellen kommen in Kraftfahrzeugleuchten Glühlampen, Gasentladungslampen sowie unter anderem wegen ihres geringen Stromverbrauchs und geringen Bauraumbedarfs vermehrt Leuchtdioden zum Einsatz. Letztere bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

In Verbindung mit der Verwendung von LEDs als Lichtquellen in einer Kraftfahrzeugleuchte ist bekannt, mehrere LEDs von außerhalb des Leuchteninnenraums durch die Lichtscheibe hindurch sichtbar auf einer Fläche anzuordnen, welche bei eingeschalteten LEDs durch die Lichtscheibe hindurch als leuchtende Fläche wahrgenommen wird, oder die LEDs in einem von außerhalb des Leuchteninnenraums durch die Lichtscheibe hindurch nicht einsehbaren Bereich anzuordnen, wobei das von den LEDs abgestrahlte Licht über einen Reflektor und/oder einen Lichtleiter in Richtung der Lichtscheibe verteilt und umgelenkt wird, welcher Reflektor und/oder welcher Lichtleiter dann von außerhalb des Leuchteninnenraums durch die Lichtscheibe hindurch gesehen als leuchtende Fläche wahrgenommen wird, von welcher aus das Licht schließlich durch die Lichtscheibe hindurch aus dem Leuchteninnenraum austreten kann.

Nachteilig an beiden Varianten ist neben dem immer noch teils erheblichen Bauraumbedarf im Leuchteninnenraum der notwendige, nicht unerhebliche Aufwand, um ein homogenes Erscheinungsbild der leuchtenden Fläche zu erhalten.

Eine Behebung dieser Nachteile verspricht die Verwendung organischer Leuchtdioden (Organic Light Emitting Diode; OLED) als Lichtquellen.

Eine OLED ist ein leuchtendes Dünnschichtbauelement aus organischen halbleitenden Materialien mit mindestens einer Emitterschicht, das sich von den anorganischen Leuchtdioden (LED) dadurch unterscheidet, dass keine einkristallinen Materialien erforderlich sind. Im Vergleich zu anorganischen LEDs lassen sich organische Leuchtdioden daher in kostengünstiger Dünnschichttechnik herstellen. OLEDs ermöglichen dadurch die Herstellung flächiger Lichtquellen, die einerseits sehr dünn und andererseits als durch die Lichtscheibe einer Kraftfahrzeugleuchte hindurch sichtbare leuchtende Fläche eingesetzt einen besonders homogenes Erscheinungsbild aufweisen.

Durch EP 2 592 331 A1 ist eine Kraftfahrzeugleuchte mit einer vermittels eines Halters im Leuchteninnenraum untergebrachten OLED bekannt. Der Halter ist dabei als ein die OLED zumindest bereichsweise umgebender Rahmen ausgeführt. Zum Schutz ihrer Glasplättchen vor Zerstörung durch Vibrationen kann dabei vorgesehen sein, zwischen dem Halter und der OLED ein Elastomer anzuordnen.

Durch DE 10 2009 009 087 A1 ist bekannt, im Leuchteninnenraum einer Kraftfahrzeugleuchte eine OLED als Lichtquelle eines zur Erfüllung einer zweiten Lichtfunktion vorgesehenen Leuchtmittels im Strahlengang zwischen einem zur Erfüllung einer ersten Lichtfunktion vorgesehenen Leuchtmittels und einer Lichtscheibe anzuordnen. Die OLED ist dabei zwischen zwei Klammern einer Halterung gespannt.

Durch DE 20 207 799 U1 ist eine Kraftfahrzeugleuchte mit einer auf einem Träger aufsitzenden Lichtscheibe und einer zwischen Lichtscheibe und dem Träger angeordneten OLED bekannt.

Durch DE 10 2007 021 179 A1 ist bekannt, eine OLED in eine transparente, einen Leuchteninnenraum begrenzende Rückwand einer Kraftfahrzeugleuchte zu integrieren.

Durch DE 10 2005 024 838 A1 ist ein für den Innen- oder Außenbereich eines Fahrzeugs vorgesehenes Leuchtmittel mit einer OLED als Lichtquelle bekannt. Das Leuchtmittel umfasst eine auf einem Träger angeordnete OLED. Die OLED ist beispielsweise durch Aufkleben mit einem flächigen Träger verbunden. Der beispielsweise im Spritzguss hergestellte Träger weist ein Anschlussmittel auf, mit dem das Leuchtmittel mit dem Kraftfahrzeug elektrisch und mechanisch verbindbar ist. Das Anschlussmittel in Form eines Zapfens mit Rastmitteln ist mittig auf der Rückseite des Trägers angeordnet.

Durch US 2011/089811 A1 ist ein Leuchtmittel mit einer OLED als Lichtquelle bekannt. Die OLED ist auf einem gekrümmten Träger angeordnet. Der Träger wird mit der Krümmung hergestellt. Die ebene OLED wird auf den Träger aufgebracht, indem dieser elastisch in ebene Form gebracht wird. Nach dem Aufbringen der OLED wird die elastische Verformung des Trägers aufgehoben, so dass der OLED die Krümmung des Trägers aufgezwungen wird.

Durch EP 2 474 448 A1 ist ein Innenrückblickspiegel mit einer OLED als Blendschutz bekannt. Das gesamte Spiegelglas des Innenrückblickspiegels ist hierbei mit der OLED versehen. Ein Umgebungslichtsensor erfasst die Scheinwerfer anderer Fahrzeuge und dimmt deren Blendwirkung durch Betrieb der OLED.

Um OLEDs als Lichtquellen von für den Einsatz in Kraftfahrzeugleuchten vorgesehenen Leuchtmitteln verwenden zu können, müssen beispielsweise durch technische Anforderungen vorgegebene Umgebungsbedingungen beherrscht werden, wie sie beim Einsatz in Kraftfahrzeugleuchten auftreten. Hierbei handelt es sich vor allem um technische Anforderungen hinsichtlich mechanischer und thermischer Stabilität, wie sie im Automobilbereich beispielsweise durch den Standard LV 124 vorgegeben werden.

Eine typische technische Anforderung hieraus bezüglich thermischer Stabilität betrifft den sowohl im Warmzustand bei eingeschaltetem Leuchtmittel, als auch im Kaltzustand bei ausgeschaltetem Leuchtmittel, sowie bei der Inbetriebnahme aus dem Kaltzustand zu ertragenden Temperaturbereich, innerhalb welchen Temperaturbereichs sämtliche zur Erfüllung einer Lichtfunktion in einer Kraftfahrzeugleuchte verbauten Leuchtmittel die Lichtverteilungen der durch sie zu bewältigenden Lichtfunktionen jeweils vollständig erfüllen leisten müssen. Die diesbezügliche technische Anforderung sieht im Kraftfahrzeug- bzw. Automobilbereich einen Temperaturbereich von -40°C bis 80°C vor. Darüber hinaus gibt es auch technische Anforderungen für Temperaturbereiche mit höheren und/oder niedrigeren Temperaturgrenzen.

Dennoch sind höhere oder tiefere Temperaturen als in den genannten Anforderungen in der Realität nicht auszuschließen und möglich. Beispielsweise bei Sonneneinstrahlung in heißen Wüstengebieten können in einer Leuchte oder an Leuchtenteilen auch Temperaturen von über 80°C auftreten, ebenso wie in arktischen Regionen beispielsweise bei klarem Nachthimmel Temperaturen von unter minus 40°C auftreten können.

Bei der Verwendung von OLEDs ergibt sich hierbei die spezielle Problemstellung, dass sich bei gleichbleibendem, an die OLED angelegtem Strom die Spannung über einen großen Bereich mit der Temperatur ändert. Speziell im Bereich unter etwa 0 °C steigt die Spannung bei konstanter Stromstärke sehr stark an. Dies unterscheidet sie - elektrisch gesehen - stark von LEDs. Hierdurch wird die elektrische Ansteuerung der OLED mittels Schaltungen schwierig oder mit der bislang für LEDs eingesetzten Schaltungstechnik zumindest für den Automobilbereich mit seinen begrenzten Bordnetzspannungen äußerst aufwändig oder gar unmöglich.

Die voranstehenden Ausführungen zur Erfüllung von Lichtverteilungen von Lichtfunktionen zumindest im durch die technischen Anforderungen an Kraftfahrzeugleuchten vorgegebenen Temperaturbereich bei der Verwendung von OLEDs als Lichtquellen von Leuchtmitteln in Kraftfahrzeugleuchten finden beim Stand der Technik ungeachtet der damit verfolgten hehren Ziele bislang keinerlei Beachtung.

Durch US 2013/0328491 A1 ist ein temperaturabhängiger Wechsel zwischen einer Parallelschaltung zweier LED-Stränge zu einer Serienschaltung der beiden LED-Stränge bei einer Überschreitung einer an einem Linearregler indirekt erfassten Schwellentemperatur bekannt.

Eine Aufgabe der Erfindung ist es, zumindest ein Leuchtmittel mit mindestens zwei beispielsweise von einem gegebenenfalls vorgesehenen Träger gehaltenen OLEDs sowie eine mit mindestens einem solchen Leuchtmittel ausgestattete Kraftfahrzeugleuchte und ein Verfahren zum Betrieb zumindest eines Leuchtmittels mit mindestens zwei OLEDs als Lichtquellen oder einer mit wenigstens einem entsprechenden Leuchtmittel ausgestatteten Kraftfahrzeugleuchte zu entwickeln, welche die Nachteile des Standes der Technik beseitigen und die Verwendung von OLEDs zumindest im durch die technischen Anforderungen an Kraftfahrzeugleuchten vorgegebenen Temperaturbereich unter den ansonsten in Kraftfahrzeugen herrschenden Bedingungen - wie etwa begrenzte Bordnetzspannung - gestatten.

Die Aufgabe wird jeweils gelöst mit den Merkmalen der unabhängigen Ansprüche.

Zur Lösung der Aufgabe sieht die Erfindung eine beispielsweise in einem Leuchtmittel und/oder in einer Kraftfahrzeugleuchte einsetzbare Schaltungsanordnung zum Betrieb mehrerer elektrischer Verbraucher, wie beispielsweise OLEDs, vor, welche Schaltungsanordnung mindestens einen Temperaturfühler zur Erfassung wenigstens einer Temperatur, beispielsweise einer Umgebungstemperatur, und mindestens zwei getrennte elektrische Anschlüsse beispielsweise für jeweils mindestens einen elektrischen Verbraucher, beispielsweise je mindestens eine OLED, aufweist. Mehrere an einen elektrischen Anschluss angeschlossene elektrische Verbraucher, wie beispielsweise OLEDs können dabei parallel und/oder in Serie geschaltet sein. Die Schaltungsanordnung umfasst darüber hinaus Schaltungsmittel, mit denen zumindest ein Teil der elektrischen Anschlüsse beispielsweise alle, paarweise oder in Gruppen zu drei, vier oder mehr Anschlüssen, oberhalb oder unterhalb wenigstens einer vorgegebenen Schwellentemperatur in Serie geschaltet sind und/oder unterhalb oder oberhalb wenigstens einer vorgegebenen Schwellentemperatur parallel geschaltet sind. Dementsprechend sieht die Erfindung zur Lösung der Aufgabe auch ein Verfahren vor, welches eine entsprechende Verschaltung elektrischer Anschlüsse in Abhängigkeit von einem Ergebnis eines Vergleichs einer erfassten Temperatur mit mindestens einer vorgegebenen Schwellentemperatur vorsieht.

Die Schaltungsanordnung kann bei einer von dem Temperaturfühler erfassten Temperatur, die oberhalb wenigstens einer vorgegebenen Schwellentemperatur liegt, ein oder mehrere Paare und/oder Gruppen von in Serie geschalteten elektrischen Anschlüssen aufweisen, wobei mehrere Paare und/oder Gruppen von in Serie geschalteten elektrischen Anschlüssen elektrisch parallel geschaltet sein können.

Die Schaltungsanordnung kann bei einer von dem Temperaturfühler erfassten Temperatur, die unterhalb wenigstens einer vorgegebenen Schwellentemperatur liegt, ein oder mehrere Paare und/oder Gruppen von parallel geschalteten elektrischen Anschlüssen aufweisen, wobei mehrere Paare und/oder Gruppen von parallel geschalteten elektrischen Anschlüssen elektrisch parallel geschaltet sein können.

Die Parallelschaltung mehrerer Paare und/oder Gruppen von in Serie oder parallel geschalteten elektrischen Anschlüssen gebietet sich wegen des beispielsweise bei einem Einsatz in Kraftfahrzeugen begrenzten Niveau der elektrischen Bordspannung. Auch kann hierdurch ohne das Vorliegen einer Begrenzung durch eine Bordspannung eine einfache temperaturabhängige Anpassung von an elektrischen Anschlüssen anliegenden Spannungen vorgenommen werden, die auch in Bereichen außerhalb von Kraftfahrzeuganwendungen relevant sein kann.

Indem bei einer unterhalb mindestens einer ersten vorgegebenen Schwellentemperatur von beispielsweise 0°C liegenden, von dem Temperaturfühler erfassten Temperatur zwei oder mehr oberhalb der Schwellentemperatur in Serie geschaltete elektrische Anschlüsse parallel verschaltet werden, erhöht sich beispielsweise in Verbindung mit einer Stromversorgung von OLEDs in Kraftfahrzeuganwendungen die Spannung je OLED, wodurch der höhere Spannungsbedarf von OLEDs beispielsweise unterhalb einer Schwellentemperatur von beispielsweise 0°C ausgeglichen werden kann.

Hierdurch liegt unterhalb der ersten vorgegebenen von dem Temperaturfühler erfassten Schwellentemperatur an den mindestens zwei oberhalb der ersten vorgegebenen von dem Temperaturfühler erfassten Schwellentemperatur in Serie geschalteten elektrischen Anschlüssen eines Paars oder einer Gruppe von elektrischen Anschlüssen eine höhere Spannung an, wodurch die an den wenigstens zwei Anschlüssen angeschlossenen OLEDs entsprechend ihres Spannungsbedarfs zur Aufrechterhaltung eines vorgegebenen Stroms mit einer höheren Spannung betrieben wird.

Wird eine entsprechend ausgestattete Kraftfahrzeugleuchte mit an die elektrischen Anschlüsse beispielsweise einzeln oder paarweise angeschlossenen OLEDs als Lichtquellen bei einer Außentemperatur unterhalb der ersten Schwellentemperatur in Betrieb genommen, so können die OLEDS zunächst durch die Parallelschaltung mit einer höheren Spannung betrieben werden, als dies nach einer Aufheizung des Leuchteninnenraums auf eine vom Temperaturfühler erfasste Temperatur oberhalb der Schwellentemperatur der Fall ist, wo zunächst unterhalb der Schwellentemperatur parallel geschaltete elektrische Anschlüsse bei Überschreitung der Schwellentemperatur durch Erwärmen des Leuchteninnenraums durch die Abwärme der OLEDs in Serie geschaltet werden, so dass die OLEDs im Temperaturbereich oberhalb der Schwellentemperatur mit der für sie im Dauerbetrieb optimalen Spannung betrieben werden.

Denkbar sind weitere Schwellentemperaturen, unter oder oberhalb denen gestufte Parallel- oder Serienschaltungen weiterer oder weniger elektrischer Anschlüsse stattfinden.

Vorteile ergeben sich unter Anderem durch eine Anpassung des Betriebs von elektrischen Verbrauchern, welche einen mit sich ändernder Umgebungs- und/oder Eigentemperatur veränderlichen Spannungsbedarf zur Aufrechterhaltung eines gleichbleibenden elektrischen Stroms aufweisen, wie dies beispielsweise bei OLEDs bei sinkenden Temperaturen und vor allem bei Temperaturen unterhalb 0°C der Fall ist, an einen breiten Temperaturbereich. Insbesondere bei Umgebungstemperaturen von unter 0°C kann dadurch der unvorteilhafte Strom-Spannungs-Verlauf von OLEDs zumindest in diskreten Stufen angepasst werden, wodurch diese im Kraftfahrzeugbereich einsetzbar werden.

Bevorzugte Ausführungsformen der Erfindung finden sich in einem Leuchtmittel, einer mit mindestens einem solchen Leuchtmittel ausgestatteten Kraftfahrzeugleuchte und in einem Verfahren zum Betrieb eines derartigen Leuchtmittels und/oder einer mit mindestens einem derartigen Leuchtmittel ausgestatteten Kraftfahrzeugleuchte.

Es ist ersichtlich, dass die Erfindung verwirklicht sein kann durch ein Leuchtmittel mit mindestens zwei OLEDs als Lichtquellen umfassend eine Schaltungsanordnung zur Stromversorgung und damit zum Betrieb mehrerer OLEDs. Die Schaltungsanordnung weist mindestens einen zumindest in wärmeleitendem Kontakt mit zumindest einer OLED stehenden Temperaturfühler. Der Temperaturfühler weist ein einer von ihm erfassten Temperatur proportionales Ausgangssignal auf. Der Temperaturfühler dient zur Erfassung wenigstens einer Temperatur, beispielsweise einer Umgebungstemperatur mindestens einer OLED des Leuchtmittels oder der Temperatur mindestens einer OLED des Leuchtmittels. Die Schaltungsanordnung weist außerdem mindestens zwei getrennte elektrische Anschlüsse für jeweils mindestens eine OLED auf. Mehrere an einen elektrischen Anschluss angeschlossene OLEDs können dabei parallel und/oder in Serie geschaltet sein. Die Schaltungsanordnung umfasst darüber hinaus Schaltungsmittel umfassend einen mit dem Temperaturfühler elektrisch verbundenen Schaltkreis, der vom Ausgangssignal des Temperatursensors gesteuert wird. Die Schaltungsmittel können zusätzlich zu dem Schaltkreis einen oder mehrere Teile der Schaltungsanordnung umfassen.

Mit den Schaltungsmitteln sind bei einer von dem Temperaturfühler erfassten Temperatur oberhalb einer vorgegebenen Schwellentemperatur von beispielsweise 0°C die elektrischen Anschlüsse paarweise oder in Gruppen zu drei, vier oder mehr Anschlüssen in Serie geschaltet.

Mit den Schaltungsmitteln sind bei einer von dem Temperaturfühler erfassten Temperatur unterhalb einer vorgegebenen Schwellentemperatur von beispielsweise 0°C die elektrischen Anschlüsse paarweise oder in Gruppen zu drei, vier oder mehr Anschlüssen parallel geschaltet.

Die Schaltungsanordnung kann bei einer von dem Temperaturfühler erfassten Temperatur oberhalb einer vorgegebenen Schwellentemperatur von beispielsweise 0°C mehrere Paare und/oder Gruppen von in Serie geschalteten elektrischen Anschlüssen aufweisen, wobei mehrere Paare und/oder Gruppen von in Serie geschalteten elektrischen Anschlüssen elektrisch parallel zueinander liegen können.

Die Schaltungsanordnung kann bei einer von dem Temperaturfühler erfassten Temperatur unterhalb einer vorgegebenen Schwellentemperatur von beispielsweise 0°C mehrere Paare und/oder Gruppen von parallel geschalteten elektrischen Anschlüssen aufweisen, wobei mehrere Paare und/oder Gruppen von parallel geschalteten elektrischen Anschlüssen elektrisch parallel zueinander liegen können.

Hierdurch liegt unterhalb einer vorgegebenen Schwellentemperatur von beispielsweise 0°C an den parallel geschalteten elektrischen Anschlüssen beispielsweise eines Paars oder einer Gruppe von drei, vier oder mehr elektrischen Anschlüssen eine höhere Spannung an, als oberhalb einer vorgegebenen Schwellentemperatur von beispielsweise 0°C, wo sich die Spannung auf die in Serie geschalteten elektrischen Anschlüsse beispielsweise eines Paars oder einer Gruppe von drei, vier oder mehr elektrischen Anschlüssen aufteilt. Dadurch können unterhalb einer vorgegebenen Schwellentemperatur von beispielsweise 0°C die an den wenigstens zwei elektrischen Anschlüssen des Leuchtmittels angeschlossenen OLEDs entsprechend ihres Spannungsbedarfs zur Aufrechterhaltung eines vorgegebenen Stroms mit einer höheren Spannung betrieben werden.

Dabei können mehrere Schwellentemperaturen in Anhängigkeit von der Anzahl der vorhandenen, für jeweils mindestens eine OLED vorgesehenen elektrischen Anschlüsse des Leuchtmittels vorgegeben sein, wobei bei einer niedrigsten Schwellentemperatur alle elektrischen Anschlüsse zumindest eines Paars oder einer Gruppe von drei, vier oder mehr elektrischen Anschlüssen parallel geschaltet sind, und bei einer höchsten Schwellentemperatur alle elektrischen Anschlüsse zumindest eines Paars oder einer Gruppe von drei, vier oder mehr elektrischen Anschlüssen in Serie geschaltet sind.

Vorteile ergeben sich unter Anderem durch eine Anpassung des Betriebs von OLEDs an einen breiten Temperaturbereich. Insbesondere bei Umgebungstemperaturen von unter 0°C kann dadurch der unvorteilhafte Strom-Spannungs-Verlauf von OLEDs zumindest in diskreten Stufen angepasst werden, wodurch diese im Kraftfahrzeugbereich einsetzbar werden.

Ein Gegenstand der Erfindung betrifft demnach ein Leuchtmittel umfassend mindestens zwei OLEDs als Lichtquellen. Das Leuchtmittel umfasst eine Schaltungsanordnung zur Stromversorgung der OLEDs bei Betrieb des Leuchtmittels. Die Schaltungsanordnung weist wenigstens zwei elektrische Anschlüsse für jeweils mindestens eine OLED auf. Sind mehrere OLEDs an einen elektrischen Anschluss angeschlossen, können diese parallel und/oder in Serie geschaltet sein.

Die Schaltungsanordnung umfasst mindestens einen beispielsweise zumindest in wärmeleitendem Kontakt mit wenigstens einer OLED stehenden Temperaturfühler beispielsweise in Form eines Temperatursensors. Der Temperaturfühler weist ein einer von ihm erfassten Temperatur, beispielsweise einer Umgebungstemperatur mindestens einer OLED des Leuchtmittels oder der Temperatur mindestens einer OLED des Leuchtmittels proportionales Ausgangssignal auf. Die Schaltungsanordnung umfasst darüber hinaus einen mit dem Temperaturfühler elektrisch verbundenen Schaltkreis, der via des Ausgangssignals des Temperatursensors gesteuert wird. Der Schaltkreis ist mit der Schaltungsanordnung verbunden und steuert die elektrische Verschaltung der elektrischen Anschlüsse der Schaltungsanordnung in Abhängigkeit von der vom Temperaturfühler erfassten Temperatur.

Dabei ist vorgesehen die elektrischen Anschlüsse der Schaltungsanordnung gruppenweise, beispielsweise zu Paaren, zu Tripeln, zu Vieren etc., bei einer von dem Temperaturfühler erfassten Temperatur, welche unterhalb einer vorgegebenen Schwellentemperatur von beispielsweise 0°C liegt, parallel zueinander zu verschalten, wohingegen die unterhalb einer vorgegebenen Schwellentemperatur von beispielsweise 0°C beispielsweise zu Paaren, zu Tripeln, zu Vieren bzw. Quadrupeln etc., gruppenweise parallel verschalteten elektrischen Anschlüsse bei einer von dem Temperaturfühler erfassten Temperatur, welche oberhalb einer vorgegebenen Schwellentemperatur von beispielsweise 0°C liegt, in Serie zueinander verschaltet werden. Dementsprechend können bei einem Leuchtmittel mit einer Schaltungsanordnung mit beispielsweise sechs elektrischen Anschlüssen für jeweils mindestens eine OLED die elektrischen Anschlüsse zu drei Gruppen von jeweils einem Paar zu je zwei elektrischen Anschlüssen oder zu zwei Gruppen von jeweils einem Tripel zu je drei elektrischen Anschlüssen gruppiert sein. Die beispielsweise zwei oder drei elektrischen Anschlüsse einer Gruppe von elektrischen Anschlüssen sind unterhalb einer vorgegebenen Schwellentemperatur von beispielsweise 0°C parallel und bei und oberhalb einer vorgegebenen, beispielsweise identischen Schwellentemperatur von beispielsweise 0°C in Serie verschaltet.

Vorzugsweise werden alle Gruppen von elektrischen Anschlüssen der Schaltungsanordnung eines Leuchtmittels identisch behandelt, wobei die elektrischen Anschlüsse aller Gruppen der Schaltungsanordnung innerhalb ihrer jeweiligen Gruppe unterhalb einer vorgegebenen Schwellentemperatur von beispielsweise 0°C parallel und bei und oberhalb einer vorgegebenen, beispielsweise identischen Schwellentemperatur von beispielsweise 0°C in Serie verschaltet werden.

Bei allen vorher und nachfolgend noch beschriebenen Ausführungsvarianten ist hierbei unerheblich, ob ein Temperaturbereich unterhalb oder oberhalb einer Schwellentemperatur diese jeweils umfasst. Dies ist generell unerheblich für die Erfindung, welche eine Veränderung der elektrischen Verschaltung abhängig vom Vergleich mindestens einer erfassten Temperatur mit wenigstens einer Schwellentemperatur vorsieht, wobei je nach Richtung einer Überschreitung einer Schwellentemperatur auch unterschiedliche Schwellentemperaturen vorgegeben sein können. Im Nachfolgenden wird deshalb auf den Umstand, welcher Fall eines Ergebnisses eines Vergleichs einer erfassten Temperatur mit einer Schwellentemperatur die Schwellentemperatur selbst umfasst, nicht mehr explizit eingegangen, weil die Erfindung es sowohl erlaubt, dass ein Temperaturbereich unterhalb einer Schwellentemperatur die Schwellentemperatur umfasst, als auch, dass ein Temperaturbereich oberhalb einer Schwellentemperatur die Schwellentemperatur umfasst.

Durch die Einflussnahme auf die Verschaltung der elektrischen Anschlüsse der Schaltungsanordnung in Abhängigkeit von der vom Temperaturfühler erfassten Temperatur, nimmt der Schaltkreis - und damit die Schaltungsanordnung - Einfluss auf die an den elektrischen Anschlüssen anliegende Spannung in Abhängigkeit von der Temperatur mindestens einer OLED des Leuchtmittels.

Dabei kann eine erste Gruppe elektrischer Anschlüsse der Schaltungsanordnung mit einer zweiten Gruppe elektrischer Anschlüsse der Schaltungsanordnung parallel oder in Serie geschaltet sein. Demnach können wenigstens zwei Paare oder Gruppen von drei, vier oder mehr elektrischen Anschlüssen, welche innerhalb ihrer Gruppe temperaturabhängig parallel und in Serie und umgekehrt geschaltet werden, in Serie und/oder parallel zueinander angeordnet sein.

Bei einem Ausgangssignal proportional einer vom Temperaturfühler erfassten Temperatur, die niedriger ist, als eine vorgegebene Schwellentemperatur, steuert das Ausgangssignal des Temperaturfühlers den Schaltkreis derart, dass die Schaltungsanordnung bei eingeschaltetem Leuchtmittel bzw. bei Betrieb des Leuchtmittels wenigstens einen ersten elektrischen Anschluss parallel zu einem zweiten elektrischen Anschluss schaltet.

Bei einem Ausgangssignal proportional einer vom Temperaturfühler erfassten Temperatur, die höher ist, als eine vorgegebene Schwellentemperatur, steuert das Ausgangssignal des Temperaturfühlers den Schaltkreis derart, dass die Schaltungsanordnung bei eingeschaltetem Leuchtmittel bzw. bei Betrieb des Leuchtmittels die unterhalb einer vorgegebenen Schwellentemperatur parallel geschalteten elektrischen Anschlüsse dann in Serie schaltet.

Mit anderen Worten steuert das Ausgangssignal des Temperaturfühlers den Schaltkreis derart, dass bei einem Ausgangssignal proportional einer vom Temperaturfühler erfassten Temperatur, die höher ist, als eine vorgegebene Schwellentemperatur, die Schaltungsanordnung bei eingeschaltetem Leuchtmittel bzw. bei Betrieb des Leuchtmittels den unterhalb einer vorgegebenen Schwellentemperatur parallel zum zweiten elektrischen Anschluss parallel geschalteten ersten elektrischen Anschluss und den unterhalb einer vorgegebenen Schwellentemperatur parallel zum ersten elektrischen Anschluss parallel geschalteten zweiten elektrischen Anschluss dann zumindest in Serie schaltet.

Zumindest ein Temperaturfühler ist unmittelbar auf einer OLED, beispielsweise auf einem vorder- oder rückseitigen Glas- oder Kunststoffplättchen einer als Lichtquelle des Leuchtmittels vorgesehenen OLED angeordnet.

Der Temperaturfühler kann im einfachsten Fall zumindest mit einer wenigstens einen Schalter umfassenden Partie des Schaltkreises verbunden sein. Der wenigstens eine Schalter wird bei einem einer von dem Temperaturfühler erfassten Temperatur, die kleiner ist, als eine vorgegebene Schwellentemperatur von beispielsweise 0°C proportionalen Ausgangssignal von dem Temperaturfühler derart geschaltet, dass die elektrischen Anschlüsse der Schaltungsanordnung bei Betrieb des Leuchtmittels in Paaren und/oder in Gruppen zu zwei, drei, vier oder mehr elektrischen Anschlüssen parallel geschaltet sind. Der wenigstens eine Schalter wird bei einem einer von dem Temperaturfühler erfassten Temperatur, die größer ist, als eine vorgegebene Schwellentemperatur von beispielsweise 0°C proportionalen Ausgangssignal von dem Temperaturfühler derart geschaltet, dass die bei einem einer von dem Temperaturfühler erfassten Temperatur, die kleiner ist, als eine vorgegebene Schwellentemperatur von beispielsweise 0°C proportionalen Ausgangssignal bei Betrieb des Leuchtmittels in Paaren und/oder in Gruppen zu zwei, drei, vier oder mehr elektrischen Anschlüssen parallel geschalteten elektrischen Anschlüsse der Schaltungsanordnung dann paarweise und/oder in Gruppen zu zwei, drei, vier oder mehr elektrischen Anschlüssen in Serie geschaltet sind.

Alternativ oder zusätzlich kann der Schaltkreis einen Proportionalregler umfassen, der bei Betrieb des Leuchtmittels in Abhängigkeit von der vom Temperaturfühler erfassten Temperatur unterhalb einer vorgegebenen Schwellentemperatur um so mehr elektrische Anschlüsse parallel schaltet, je tiefer die erfasste Temperatur unterhalb der vorgegebenen Schwellentemperatur liegt.

Der Schaltkreis kann alternativ oder zusätzlich zu den beschriebenen Varianten ein oder mehrere Proportional- und/oder Differential- und/oder Integralregler bzw. -glieder (P-, D-, I-Glieder) und/oder Schalter umfassen, um eine gewünschte Regelcharakteristik zu erhalten.

Wichtig ist hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler und OLED entstehen können.

Vorteile gegenüber dem Stand der Technik ergeben sich unter Anderem durch eine Anpassung des Betriebs von OLEDs an einen breiten Temperaturbereich. Insbesondere bei Umgebungstemperaturen von unter 0°C kann dadurch der unvorteilhafte Strom-Spannungs-Verlauf von OLEDs zumindest in einer oder mehreren diskreten Stufen angepasst werden, wodurch OLEDs im Kraftfahrzeugbereich einsetzbar werden.

Die Erfindung stellt damit eine Möglichkeit dar, OLEDs in Kraftfahrzeugleuchten in einem großen Temperaturbereich zu betreiben. OLEDs werden, wie auch LEDs, stromgetrieben. Eine einfache Spannungserhöhung ohne aufwändige Spannungsumwandlung, wozu die im Kraftfahrzeug vorherrschende Gleichspannung in Wechselspannung und wieder zurück umgewandelt werden muss, ist nicht möglich, da der zur Verfügung stehende Spannungsbereich des Bordnetzes im Kraftfahrzeug nicht dafür ausreicht, mehrere beispielsweise in Serie geschaltete OLEDs unterhalb einer Temperatur zu betreiben, unterhalb welcher OLEDs einen stark erhöhten Spannungsbedarf zur Aufrechterhaltung eines konstanten Stroms aufweisen.

OLEDs weisen als stromgetriebene Lichtquellen unterhalb von Betriebstemperaturen von etwa 25°C einen großen Spannungsanstieg bei gleichzeitig konstanter Stromstärke und bei sinkender Temperatur auf. Verglichen mit den I-U-Diagrammen von LEDs verhalten sie sich damit deutlich verschieden mit einer starken Verschiebung und Verlaufsänderung der Kennlinie im I-U-Diagramm unterhalb einer Temperatur von 25°C. Um diesem Effekt einer starken Verschiebung und Verlaufsänderung der Kennlinie mit der Temperatur einer OLED im Vergleich zu einer LED entgegenzuwirken wird eine Schaltungsanordnung vorgesehen, welche bei Temperaturen unterhalb einer vorgegebenen Schwellentemperatur von beispielsweise 0°C elektrische Anschlüsse der Schaltungsanordnung parallel schaltet und oberhalb einer vorgegebenen Schwellentemperatur von beispielsweise 0°C die Parallelschaltung elektrischer Anschlüsse der Schaltungsanordnung aufhebt und die unterhalb einer vorgegebenen Schwellentemperatur von beispielsweise 0°C parallel geschalteten elektrische Anschlüsse der Schaltungsanordnung zumindest paarweise oder in Gruppen zu zwei, drei, vier oder mehr elektrischen Anschlüssen in Serie schaltet. Hierdurch liegt oberhalb einer vorgegebenen Schwellentemperatur, wenn die elektrischen Anschlüsse in Serie geschaltet sind, eine niedrigere Spannung an jedem elektrischen Anschluss an, als wenn die elektrischen Anschlüsse parallel geschaltet sind.

Durch die getroffenen Maßnahmen kann der höhere Spannungsbedarf von OLEDs beispielsweise unterhalb einer Schwellentemperatur von 0°C ausgeglichen werden.

Die Erfindung löst damit das Problem, den Spannungsverlauf von OLEDs in den Griff zu bekommen.

Die Erfindung löst damit das Problem, OLEDs beispielsweise in einem Temperaturbereich von minus 40°C bis plus 80°C und damit für den Einsatz im Kraftfahrzeug- bzw. Automobilbereich vorzusehen, obgleich OLEDs im Vergleich zu konventionellen LEDs ein wesentlich anderes Temperaturverhalten aufweisen, weil deren Spannung bei gleichbleibendem Strom bei Temperaturen unter 0°C sehr stark ansteigt. Die Erfindung zeigt Maßnahmen auf, die getroffen werden können, um den Spannungsverlauf von OLEDs insbesondere im für den Einsatz im Kraftfahrzeug- bzw. Automobilbereich relevanten Temperaturbereich von -40°C bis +80°C in den Griff zu bekommen.

Zusätzliche Vorteile ergeben sich unter Anderem dadurch, dass keine aufwendigen elektrischen Schaltungen nötig sind, um den Strom über einen großen Spannungsbereich konstant zu halten. Aktuell ist dies mit z. B. DC/DC-Wandlerschaltungen (Gleichspannungswandler) möglich, die allerdings teuer sind. Auch führen die hierin verbauten Spulen zu Abstrahlung und/oder Einstrahlung von relativ starken elektromagnetischen Feldern, wodurch es jedoch zu Problemen hinsichtlich elektromagnetischer Verträglichkeit (EMV) innerhalb des Leuchtmittels und damit in einer mit einem solchen Leuchtmittel ausgestatteten Kraftfahrzeugleuchte kommen kann. Daher muss hierfür eine spezielle Abschirmung der Elektronik erfolgen einhergehend mit einem zusätzlichen Schirmungsbauteil.

Anstelle eines zusätzlichen Bauteils kann die Abschirmung der Elektronik auch durch einen Kühlkörper verwirklicht werden, der gegebenenfalls schon vorhanden ist. Hierbei wird das sich hinsichtlich EMV kritisch verhaltende Bauteil, wie etwa eine Spule, das beispielsweise an einer Platine befestigt ist, von dem beispielsweise aus Metall oder Gusseisen hergestellten Kühlkörper umgeben, beispielsweise indem die Spule in eine Kuhle des Kühlkörpers beim Befestigen eintaucht. Der Kühlkörper wird so nicht nur zur Kühlung, sondern gleichzeitig als Schirmblech verwendet.

Ein weiterer Vorteil ergibt sich dadurch, dass OLEDs hierdurch auch innerhalb eines bei Bordnetzen von Kraftfahrzeugen nicht unüblichen Spannungsbereichs von 7V bis 17V betrieben werden können, da der kritische Spannungsbereich bei Temperaturen unter 0°C vermittels der Parallelschaltung von zur Stromversorgung zumindest einzelner OLEDs vorgesehenen elektrischen Anschlüssen umgangen werden kann.

Eine vorteilhafte Ausgestaltung ergibt sich, wenn das Leuchtmittel zusätzlich einen Träger umfasst, an dem mindestens eine als Lichtquelle des Leuchtmittels vorgesehene OLED angeordnet ist, beispielsweise indem der Träger die mindestens eine OLED des Leuchtmittels trägt oder hält.

OLEDs weisen eine Schichtstapelhöhe in der Größenordnung von etwa 100 nm auf. Die Stapel sind eingeschlossen zwischen metallischen Schichten für Anode und Kathode. Zum Schutz gegen Wasser, Sauerstoff sowie zum Schutz gegen andere Umwelteinflüsse, wie etwa Kratzbeschädigung und/oder Druckbelastung sind OLEDs typischerweise mit einem anorganischen Material insbesondere mit Glas verkapselt. Zwar gibt es Anstrengungen, das Glas durch Kunststoff zu ersetzen, die jedoch zumindest noch nicht vom gewünschten Erfolg gekrönt sind, weil die Dichtigkeit der alternativen Materialien für die Verkapselung zumindest noch nicht ausreichend gut genug ist.

Die OLEDs müssen dabei möglichst frei von mechanischen Spannungen (spannungsfrei) und Momenten (momentfrei) aufgenommen werden, da die zur Verkapselung der Schichtstapel vorgesehenen Glasplättchen mit jeweils etwa 0,7 bis 1,2 mm relativ dünn und damit auch relativ zerbrechlich sind. Vor allem sind auch die Glasaußenkanten empfindlich gegen mechanische Belastungen und können leicht ausbrechen.

Teilweise sind die Gläser noch dünner, sofern keine Dünnschichtverkapselung in den Schichtstapel zugefügt wird, da dann mit einem Kavitätsglas gearbeitet wird. Dabei wird das Glas auf der Kathodenseite beispielsweise ausgefräst, um den so genannten Getter unterzubringen, dessen Aufgabe es ist, Feuchtigkeit, die beispielsweise durch Diffusion durch die Kleberschicht zwischen den zwei Glasplatten eintreten kann, im Inneren der OLED aufzunehmen und die organischen Schichten hiervor zu schützen.

Das Kavitätsglas hat damit im mittleren Bereich Dicken von etwa 0,5 mm und weniger und ist damit sehr empfindlich gegen Druckbelastungen. Auch darf durch Druckbelastung der Getter, der in entsprechend ausgeführten OLEDs mit etwas Abstand zu den organischen Schichten angeordnet ist, nicht auf die organischen Schichten drücken, da hierdurch die wenige Nanometer dicken Schichten beschädigt werden könnten, was zu einem teilweisen oder totalen Ausfall der OLED führen würde.

Um OLEDs als Lichtquellen von für den Einsatz in Kraftfahrzeugleuchten vorgesehenen Leuchtmitteln verwenden zu können, müssen diese daher möglichst spannungs- und momentfrei aufgenommen werden, da die zur Verkapselung der Schichtstapel vorgesehenen Glasplättchen relativ dünn und damit auch relativ zerbrechlich sind. Vor allem sind auch die Glasaußenkanten empfindlich gegen mechanische Belastungen und können leicht ausbrechen.

Mit der Verwendung eines Trägers, an welchem eine oder mehrere OLEDs des Leuchtmittels angeordnet und beispielsweise in einem Leuchteninnenraum gehalten sind, einhergehende Vorteile sind eine Halterung frei von mechanischen Spannungen für die entsprechenden OLEDs. Hierdurch werden Schäden vermieden, die wegen des Aufbaus von OLEDs mit eine Vorder- bzw. Rückseite der OLED bildenden Deck- und Rückflächen aus jeweils dünnen Glasplättchen beim Einsatz in Kraftfahrzeugleuchten auftreten würden, wenn OLEDs nicht frei von mechanischen Spannungen untergebracht werden können. Darüber hinaus erlaubt der Träger den Erhalt einer Kühlung bzw. Abfuhr der beim Betrieb von OLEDs entstehenden Wärme, die für den tatsächlichen Gebrauch von OLEDs, die sehr temperaturempfindlich sind, in Kraftfahrzeugleuchten vorteilhaft ist.

Die Erfindung ermöglicht dadurch, OLEDs unter den im Betrieb von Kraftfahrzeugleuchten auftretenden mechanischen und thermischen Belastungen einzusetzen und damit für den tatsächlichen Gebrauch in Kraftfahrzeugen vorzusehen.

Ein anderer Gegenstand der Erfindung betrifft eine Kraftfahrzeugleuchte mit wenigstens einem zur Erfüllung wenigstens einer Lichtfunktion der Kraftfahrzeugleuchte vorgesehenen, zuvor beschriebenen Leuchtmittel.

Wird eine entsprechend ausgestattete Kraftfahrzeugleuchte mit einem Leuchtmittel mit zwei oder mehr OLEDs als Lichtquellen bei einer Umgebungstemperatur gleich oder unterhalb der ersten Schwellentemperatur in Betrieb genommen, so werden die OLEDs aufgrund der dann vorgesehenen Parallelschaltung der elektrischen Anschlüsse, via denen die OLEDs mit Strom versorgt werden, mit erhöhter Spannung betrieben. Haben die mit erhöhter Spannung betriebenen OLEDs den Leuchteninnenraum mit ihrer Abwärme auf eine Temperatur gleich oder oberhalb einer vorgegebenen Schwellentemperatur aufgeheizt, wird dies durch den Temperaturfühler erfasst und die Schaltungsmittel schalten die elektrischen Anschlüsse des zumindest einen entsprechend ausgestatteten Leuchtmittels zumindest paarweise und/oder in Gruppen zu zwei, drei, vier oder mehr elektrischen Anschlüssen in Serie. Dabei ist denkbar, dass um so mehr elektrische Anschlüsse in Serie zueinander geschaltet werden, je weiter die vom Temperaturfühler erfasste Temperatur steigt bzw. dass um so weniger elektrische Anschlüsse in Serie zueinander geschaltet sind, je niedriger die vom Temperaturfühler erfasste Temperatur sinkt. Gleich oder oberhalb einer vorgegebenen Schwellentemperatur findet damit ein Normalbetrieb aller als Lichtquellen des Leuchtmittels dienenden OLEDs mit einer Betriebsspannung, welche beispielsweise dem der entsprechenden Anzahl von in Serie geschalteten elektrischen Anschlüssen entsprechenden Anteil der Betriebsspannung bei niedrigster Umgebungstemperatur entspricht, bei welcher niedrigsten Umgebungstemperatur beispielsweise alle elektrischen Anschlüsse parallel geschaltet sind.

Mindestens eine OLED des Leuchtmittels kann in eine Lichtscheibe und/oder eine Rückwand und/oder in ein anderes Bauteil der Kraftfahrzeugleuchte integriert sein.

Die Kraftfahrzeugleuchte kann einen von einer Lichtscheibe und einem Leuchtengehäuse zumindest zum Teil umschlossenen Leuchteninnenraum aufweisen. Mindestens ein zuvor beschriebenes Leuchtmittel kann in dem Leuchteninnenraum beherbergt sein.

Die Kraftfahrzeugleuchte ist bevorzugt als Heckleuchte ausgeführt. Alternativ kann die Kraftfahrzeugleuchte als in einem Außenrückblickspiegel untergebrachte Wiederholblinkleuchte ausgestaltet sein.

Die Kraftfahrzeugleuchte erlaubt die beschriebenen Vorteile des Leuchtmittels im Kraftfahrzeug- bzw. Automobilbereich zu nutzen.

Die Erfindung erlaubt die Anforderungen an thermische Stabilität beispielsweise nach dem Standard LV 124 vollständig zu erfüllen.

Ein weiterer Gegenstand der Erfindung betrifft ein Verfahren zum Betrieb zumindest eines Leuchtmittels mit mindestens zwei OLEDs als Lichtquellen oder einer mit wenigstens einem entsprechenden Leuchtmittel ausgestatteten Kraftfahrzeugleuchte.

Ein entsprechendes Verfahren sieht dementsprechend vor, unterhalb mindestens einer vorgegebenen Schwellentemperatur wenigstens zwei OLEDs eines Leuchtmittels mit mindestens zwei OLEDs als Lichtquellen beim Betrieb des Leuchtmittels parallel zu schalten, bis die bei Betrieb des Leuchtmittels parallel betriebenen OLEDs wenigstens sich selbst und/oder eine diese umgebende Umgebung auf eine Temperatur oberhalb einer vorgegebenen Schwellentemperatur erwärmt haben, und ab und/oder oberhalb einer vorgegebenen, beispielsweise mit der zuvor erwähnten Schwellentemperatur identischen Schwellentemperatur die OLEDs paarweise oder in Gruppen zu zwei, drei, vier oder mehr OLEDs in Serie zu schalten.

Das Verfahren kann einzelne Merkmale oder eine beliebige Kombination von zwei oder mehreren Merkmalen eines zuvor beschriebenen Leuchtmittels oder einer mit mindestens einem solchen Leuchtmittel ausgestatteten Kraftfahrzeugleuchte nebst einer oder mehrerer der beschriebenen und/oder getroffenen Maßnahmen zur Schaltung dessen als OLED ausgeführter Lichtquellen aufweisen.

Ebenso wie die Kraftfahrzeugleuchte es erlaubt, die Vorteile des Leuchtmittels zu nutzen, erlaubt auch das Verfahren, sämtliche Vorteile des Leuchtmittels nutzbar zu machen.

Das Verfahren kann auch auf eine Schaltungsanordnung zur Stromversorgung mehrerer elektrischer Verbraucher angewandt werden, wobei die an den elektrischen Verbrauchern zu deren Stromversorgung anliegende Spannung temperaturabhängig in beispielsweise zwei, drei vier oder mehr, bis zu einer der Anzahl der unabhängig voneinander stromversorgten elektrischen Verbrauchern entsprechenden Zahl von diskreten Stufen angepasst wird, indem die unabhängig voneinander stromversorgten elektrischen Verbraucher unter- oder oberhalb einer vorgegebenen Schwellentemperatur paarweise oder in Gruppen zu zwei, drei, vier oder mehr elektrischen Verbrauchern, oder alle parallel oder in Serie geschaltet sind, und indem die unabhängig voneinander stromversorgten elektrischen Verbraucher ober- oder unterhalb einer vorgegebenen Schwellentemperatur paarweise oder in Gruppen zu zwei, drei, vier oder mehr elektrischen Verbrauchern, oder alle entsprechend umgekehrt in Serie oder parallel geschaltet sind.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

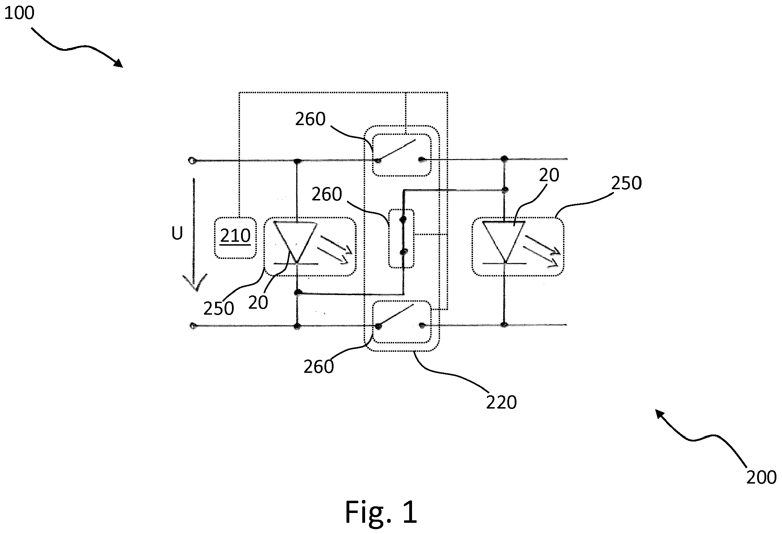

- Fig. 1: ein Schaltbild eines Leuchtmittels mit mindestens zwei OLEDs als Lichtquellen und einer Schaltungsanordnung zur Stromversorgung der OLEDs mit wenigstens einem mit zumindest einer OLED in zumindest wärmeleitendem Kontakt stehenden Temperaturfühler und mindestens zwei elektrischen Anschlüssen, an denen jeweils mindestens eine OLED angeschlossen ist.

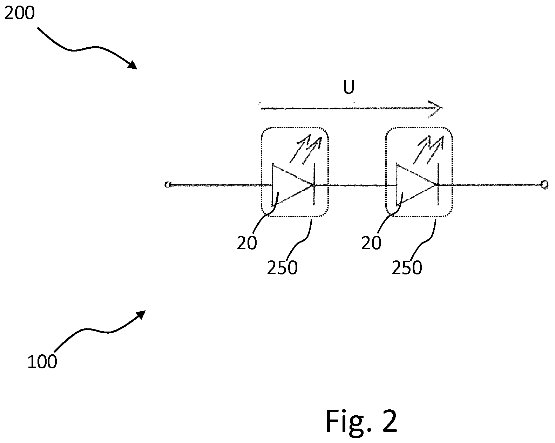

- Fig. 2: ein Schaltbild einer elektrischen Verschaltung zweier elektrischer Anschlüsse in Serie einer Schaltungsanordnung aus Fig. 1, bei einem Ausgangssignal eines Temperatursensors proportional einer Temperatur oberhalb einer vorgegebenen Schwellentemperatur.

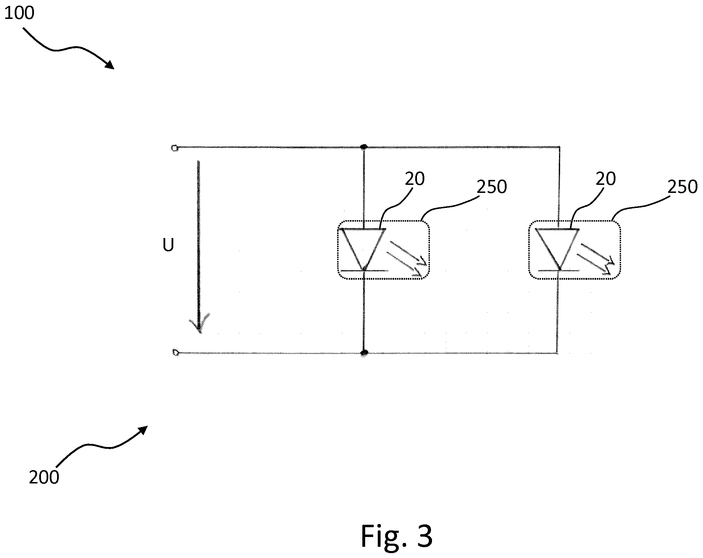

- Fig. 3: ein Schaltbild einer elektrischen Verschaltung zweier elektrischer Anschlüsse parallel zueinander einer Schaltungsanordnung aus Fig. 1, bei einem Ausgangssignal eines Temperatursensors proportional einer Temperatur unterhalb einer vorgegebenen Schwellentemperatur.

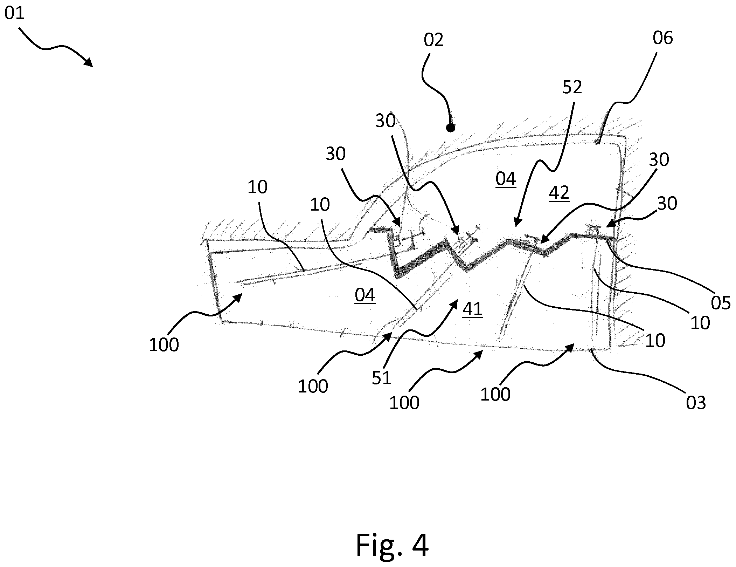

- Fig. 4: eine Kraftfahrzeugleuchte mit einem von einem Leuchtengehäuse und einer Lichtscheibe zumindest zum Teil umschlossenen Leuchteninnenraum mit einer darin beherbergten Blende, welche den Leuchteninnenraum in einen durch die Lichtscheibe hindurch gesehen vor der Blende liegenden und durch die Lichtscheibe hindurch einsehbaren, ersten Bereich und in einen durch die Lichtscheibe hindurch gesehen hinter der Blende liegenden und durch die Lichtscheibe hindurch nicht einsehbaren, zweiten Bereich einteilt, mit einer Mehrfachanordnung mehrerer Leuchtmittel mit jeweils mindestens zwei OLEDs als Lichtquellen und einer Schaltungsanordnung zum Betrieb der OLEDs mit jeweils mindestens einem mit wenigstens einer OLED jeden Leuchtmittels in zumindest wärmeleitendem Kontakt stehenden Temperaturfühler, welche jeweils mit einem mindestens eine OLED und den mit ihr in zumindest wärmeleitendem Kontakt stehenden Temperaturfühler haltenden Träger ausgestattet sind, deren Träger vom zweiten Bereich aus in den ersten Bereich hinein durch die Blende hindurchragen, in einem Querschnitt.

Ein in Fig. 1 bis Fig. 4 ganz oder in Teilen dargestelltes, beispielsweise zur Erfüllung mindestens einer Lichtfunktion einer in Fig. 4 dargestellten und beispielsweise als Heckleuchte oder als in einem Außenrückblickspiegel untergebrachte Wiederholblinkleuchte ausgeführten Kraftfahrzeugleuchte 01 vorgesehenes Leuchtmittel 100 umfasst mindestens zwei OLEDs 20 als Lichtquellen.

Das Leuchtmittel 100 zeichnet sich durch eine Schaltungsanordnung 200 zur Stromversorgung der OLEDs 20 bei Betrieb des Leuchtmittels 100 aus. Die Schaltungsanordnung 200 umfasst:
- wenigstens zwei elektrische Anschlüsse 250 für jeweils mindestens eine OLED 20,
- mindestens einen beispielsweise zumindest in wärmeleitendem Kontakt mit zumindest einer der OLEDs 20 stehenden Temperaturfühler 210 beispielsweise in Form eines Temperatursensors, zur Erfassung wenigstens einer Temperatur, welcher Temperaturfühler 210 ein einer von ihm erfassten Temperatur, beispielsweise einer Umgebungstemperatur mindestens einer OLED 20 des Leuchtmittels 100 oder der Temperatur mindestens einer OLED 20 des Leuchtmittels 100 proportionales Ausgangssignal aufweist,
- einen mit dem Temperaturfühler 210 elektrisch verbundenen und vom Ausgangssignal des Temperaturfühlers 210 gesteuerten Schaltkreis 220, welcher Schaltkreis 220 die elektrische Verschaltung der elektrischen Anschlüsse 250 bei Betrieb des Leuchtmittels 100 in Abhängigkeit von der vom Temperaturfühler 210 erfassten Temperatur steuert.

Der Schaltkreis 220 ist mit der Schaltungsanordnung 200 elektrisch verbunden und/oder Teil der Schaltungsanordnung 200 und/oder von der Schaltungsanordnung 200 umfasst und/oder umfasst zumindest zum Teil die Schaltungsanordnung 200.

Das Ausgangssignal des Temperaturfühlers 210 steuert den Schaltkreis 220 derart, dass die Schaltungsanordnung 200 bei eingeschaltetem Leuchtmittel 100 bzw. bei Betrieb des Leuchtmittels 100:
- bei einem Ausgangssignal proportional einer vom Temperaturfühler (210) erfassten Temperatur, die höher ist, als eine vorgegebene Schwellentemperatur, zumindest zwei elektrische Anschlüsse (250) der Schaltungsanordnung (200) in Serie zueinander verschaltet, und
- bei einem Ausgangssignal proportional einer vom Temperaturfühler (210) erfassten Temperatur, die niedriger ist, als eine vorgegebene Schwellentemperatur, die oberhalb einer vorgegebenen Schwellentemperatur in Serie zueinander verschalteten elektrischen Anschlüsse (250) parallel zueinander verschaltet.

Durch die Einflussnahme auf die elektrische Verschaltung der die OLEDs 20 des Leuchtmittels 100 bei dessen Betrieb mit Strom versorgenden elektrischen Anschlüsse 250 der Schaltungsanordnung 200 in Abhängigkeit von der vom Temperaturfühler 210 erfassten Temperatur nimmt der Schaltkreis 220 und damit die Schaltungsanordnung 200 Einfluss auf die an den elektrischen Anschlüssen 250 anliegende Spannung U.

Sind mehrere elektrische Anschlüsse 250 wie in Fig. 2 stark vereinfacht dargestellt in Serie geschaltet, so teilen sich die elektrischen Anschlüsse 250 die anliegende Gesamtspannung U entsprechend ihren elektrischen Widerständen. Sind mehrere elektrische Anschlüsse 250 wie in Fig. 3 stark vereinfacht dargestellt parallel geschaltet, so liegt an jedem der elektrischen Anschlüsse 250 Gesamtspannung U in voller Höhe an.

An einem elektrischen Anschluss 250 können eine oder mehrere OLEDs 20 angeschlossen sein. An wenigstens einen elektrischen Anschluss 250 können dabei mehrere OLEDs 20 parallel und/oder in Serie geschaltet angeschlossen sein.

Beispielsweise können mindestens zwei Gruppen zu jeweils wenigstens zwei elektrischen Anschlüssen 250 vorgesehen sein, welche innerhalb ihrer jeweiligen Gruppe:
- bei einem Ausgangssignal proportional einer vom Temperaturfühler 210 erfassten Temperatur die höher ist, als eine vorgegebene Schwellentemperatur, in Serie zueinander verschaltet sind, und
- bei einem Ausgangssignal proportional einer vom Temperaturfühler 210 erfassten Temperatur, die niedriger ist, als eine vorgegebene Schwellentemperatur, parallel zueinander verschaltet sind.

Fig. 2 und Fig. 3 können in diesem Fall als beispielhafte Darstellungen einer temperaturabhängigen Verschaltung der elektrischen Anschlüsse 250 einer Gruppe von elektrischen Anschlüssen 250 einer Schaltungsanordnung 200 beispielsweise eines Leuchtmittels 100 verstanden werden, wobei Fig. 2 eine Verschaltung in Serie beispielsweise oberhalb einer vorgegebenen Schwellentemperatur und Fig. 3 eine Verschaltung parallel zueinander beispielsweise unterhalb einer vorgegebenen Schwellentemperatur von elektrischen Anschlüssen 250 einer Gruppe elektrischen Anschlüssen 250 einer Schaltungsanordnung 200 darstellt.

Weist eine Schaltungsanordnung mehrere Gruppen von temperaturabhängig zueinander verschalteten elektrischen Anschlüssen 250 auf, so können alle Gruppen von elektrischen Anschlüssen 250 der Schaltungsanordnung 200 identisch behandelt werden. Hierbei werden die elektrischen Anschlüsse 250 aller Gruppen der Schaltungsanordnung innerhalb ihrer jeweiligen Gruppe unterhalb einer vorgegebenen Schwellentemperatur von beispielsweise 0°C parallel und oberhalb einer vorgegebenen, beispielsweise identischen Schwellentemperatur von beispielsweise 0°C in Serie verschaltet.

Unterhalb einer vorgegebenen Schwellentemperatur können alle elektrischen Anschlüsse 250 der Schaltungsanordnung 200 parallel zueinander geschaltet sein.

Weist eine Schaltungsanordnung mehrere Gruppen von temperaturabhängig zueinander verschalteten elektrischen Anschlüssen 250 auf, so können wenigstens zwei Gruppen zu jeweils wenigstens zwei elektrischen Anschlüssen 250 parallel oder in Serie zueinander angeordnet sein. Demnach können wenigstens zwei Paare oder Gruppen von drei, vier oder mehr elektrischen Anschlüssen 250, welche innerhalb ihrer Gruppe temperaturabhängig parallel und in Serie und umgekehrt geschaltet werden, in Serie und/oder parallel zueinander angeordnet sein.

Damit kann gemäß der Erfindung bei einem Leuchtmittel 100 mit mindestens zwei OLEDs 20 als Lichtquellen mit Hilfe einer elektrischen Schaltung, die auch Temperaturfühler 210 beinhaltet, die elektrische Verschaltung zwischen den OLEDs verändert werden. Hierbei wird abhängig von der Temperatur die Verschaltung der OLEDs von Serienverschaltung zu Parallelverschaltung (oder andersherum) geändert.

Dies ist nötig, da bei tiefen Temperaturen von beispielsweise minus 40 °C die OLEDs 20 einen signifikant höheren Spannungsbedarf zur Aufrechterhaltung des zu deren Betrieb erforderlichen, weitgehend konstanten Stroms aufweisen, als dies beispielsweise bei 0°C oder darüber der Fall ist.

Durch die Selbsterwärmung der OLEDs 20 im Betrieb wärmen sich diese und wärmt sich damit deren Umgebung, wie etwa ein von einem Leuchtengehäuse 02 und einer Lichtscheibe 03 zumindest zum Teil umgebener Leuchteninnenraum 04 einer Kraftfahrzeugleuchte (Fig. 4) relativ schnell auf. Ab einer vorgegebenen, höher gelegenen Schwellentemperatur bzw. ab einem vorgegebenen, höher gelegenen Temperaturschwellwert sorgt der Temperaturfühler 210 in der Schaltungsanordnung 200 dafür, dass die Verschaltung zwischen den OLEDs 20 geändert wird. Hierdurch lässt sich die Spannungsverschiebung, die aus der Strom-Spannungs-Kennlinie einer OLED 20 hervorgeht zumindest in einer der Anzahl der verschiedenartig miteinander verschaltbaren elektrischen Anschlüsse 250 der Schaltungsanordnung 200 entsprechenden Zahl von diskreten Stufen abfedern.

Der voranstehend beschriebene Grundgedanke der Erfindung ist schematisch in Fig. 1, Fig. 2 und Fig. 3 dargestellt. Im in Fig. 2 dargestellten Fall sind die elektrischen Anschlüsse 250 und damit die an diese angeschlossenen OLEDs 20 einer Schaltungsanordnung 200 eines Leuchtmittels 100 in Serie bzw. in Reihe geschaltet. Hierdurch teilt sich die bei einem Betrieb des Leuchtmittels 100 angelegte elektrische Gesamtspannung U auf die zwei elektrischen Anschlüsse 250 und damit auf die zwei via der beiden elektrischen Anschlüsse 250 bei Betrieb des Leuchtmittels 100 mit Strom versorgten OLEDs 20 auf. Bei identisch ausgeführten OLEDs 20 bedeutet dies, dass die gleiche, jeweils der halben Gesamtspannung U entsprechende Spannung an jeder OLED 20 anliegt. Dieser Fall ist bei höheren Temperaturen über beispielsweise 0°C sinnvoll.

Beispielsweise kann eine OLED 20 bei Temperaturen oberhalb von 0 °C etwa 3,5 V Betriebsspannung benötigen. Bei zwei gleichen, wie in Fig. 2 in Serie geschalteten OLEDs 20 fällt somit bei einer Gesamtspannung U von 7,0 V an jeder OLED 20 3,5 V ab. Fig. 3 sind die OLEDs 20 parallel geschaltet. Hierdurch liegt die Gesamtspannung U an beiden OLEDs 20 an, wobei an jeder OLED 20 die Gesamtspannung U anliegt. Der in Fig. 3 dargestellte Fall ist bei tieferen Temperaturen sinnvoll.

Eine zuvor erwähnte OLED 20 kann bei Temperaturen unterhalb von 0 °C, beispielsweise bei minus 40°C etwa 7,0 V Betriebsspannung benötigen. Bei einer in Fig. 3 dargestellten Parallelschaltung zweier gleicher OLEDs 20 fällt somit bei einer Gesamtspannung U von 7,0 V an jeder OLED 20 die Gesamtspannung U in Höhe von 7,0 V ab.

Fig. 1 zeigt ein Schaltbild eines Leuchtmittels 100 mit mindestens zwei OLEDs 20 als Lichtquellen und einer Schaltungsanordnung 200 zur Stromversorgung der OLEDs 20 mit wenigstens einem mit zumindest einer OLED 20 in zumindest wärmeleitendem Kontakt stehenden Temperaturfühler 210 und mindestens zwei elektrischen Anschlüssen 250, an denen jeweils mindestens eine OLED 20 angeschlossen ist. Die Schaltungsanordnung 200 weist einen Schaltkreis 220 mit drei Schaltern 260 auf. Hierbei erfasst ein von der Schaltungsanordnung 200 umfasster, beispielsweise in wärmeleitemdem Kontakt mit wenigstens einer der OLEDs 20 stehender Temperaturfühler 210 eine momentane Temperatur und entscheidet, ob eine vorgegebene Schwellentemperatur unter- oder überschritten ist. Der Schaltkreis 220 hat dann zur Aufgabe, abhängig von der Temperatur, die elektrischen Anschlüsse 250, via denen die OLEDs 20 bei Betrieb des Leuchtmittels 100 mit Strom versorgt werden, beispielsweise paarweise parallel oder in Serie zu schalten.

Denkbar ist, zusätzlich mittels des Temperaturfühlers 210 und einer damit gekoppelten aktiven Stromregelung in Abhängigkeit von der Temperatur die Leuchtdichte der OLEDs 20 auf einen weitestgehend konstanten Wert nachzuregeln. Auch kann die Regelung der Leuchtdichte alternativ über ein PWM-Signal (PWM: Pulsweitenmodulation) gesteuert werden. Somit kann die Schaltungsanordnung 200 innerhalb der Serien- (Fig. 2) und/oder Parallelschaltung (Fig. 3) die Leuchtdichte über den Strom nachregeln. Da dies aber nicht endlos möglich ist, wechselt die Schaltung dann zumindest ab einer bestimmten vorgegebenen Schwellentemperatur zur entsprechend anderen Verschaltungsart, in der wiederum innerhalb deren Grenzen mittels Stromanpassung oder PWM nachgeregelt werden kann.

Vorteile gegenüber dem Stand der Technik ergeben sich unter anderem dadurch, dass OLEDs 20 in Kraftfahrzeugleuchten 01 integriert und über den gesamten im Kraftfahrzeugbereich reibungslos abzudeckenden Temperaturbereich betrieben werden können. Hierbei leuchtet immer die gesamte, durch die OLEDs 20 gebildete Leuchtfläche. Die Leuchtfläche ändert sich bezüglich der Leuchtdichte in nur sehr geringem Umfang. Daher sind Nachteile, wie sie sich beispielsweise durch die Abschaltung einzelner OLEDs 20 ergeben können, umgangen.

Anstelle beispielsweise nur einer Schwellentemperatur, oberhalb welcher beispielsweise alle elektrischen Anschlüsse 250 der Schaltungsanordnung 200 zumindest gruppenweise in Serie geschaltet sind und unterhalb welcher beispielsweise alle elektrischen Anschlüsse 250 der Schaltungsanordnung 200 parallel zueinander geschaltet sind, können mehrere vorgegebene Schwellentemperaturen vorgesehen sein, beispielsweise in Anhängigkeit von der Anzahl der vorhandenen, für jeweils mindestens eine OLED 20 vorgesehenen elektrischen Anschlüsse 250 der Schaltungsanordnung 200. Bei einer höchsten Schwellentemperatur können dabei alle elektrischen Anschlüsse 250 zumindest einer Gruppe von zwei, drei, vier oder mehr elektrischen Anschlüssen 250 in Serie geschaltet sein, wobei bei einer niedrigsten Schwellentemperatur alle elektrischen Anschlüsse zumindest einer Gruppe von zwei, drei, vier oder mehr elektrischen Anschlüssen 250, welche oberhalb der höchsten Schwellentemperatur in Serie geschaltet sind, parallel geschaltet sind.

Dabei ist denkbar, dass um so mehr elektrische Anschlüsse 250 in Serie zueinander geschaltet werden, je weiter die vom Temperaturfühler 210 erfasste Temperatur steigt bzw. dass um so weniger elektrische Anschlüsse in Serie zueinander geschaltet sind, je niedriger die vom Temperaturfühler erfasste Temperatur sinkt.

Dabei ist wichtig hervorzuheben, dass die durch Schwellentemperaturen festgelegten Grenzen bei Überschreitung der jeweiligen Grenze aus unterschiedlichen Richtungen nicht identisch sein müssen. Auch kann eine Schwellentemperatur oder können die Schwellentemperaturen andere Werte als die angegebenen aufweisen, beispielsweise um Ungenauigkeiten der Temperaturerfassung auszugleichen, wie sie beispielsweise durch Wärmeleitung zwischen Temperaturfühler 210 und OLED 20 bzw. OLEDs 20 entstehen können.

Zumindest ein Temperaturfühler 210 ist unmittelbar auf einer OLED 20 angeordnet, beispielsweise auf einem vorder- oder rückseitigen Glas- oder Kunststoffplättchen einer als Lichtquelle des Leuchtmittels 100 vorgesehenen OLED 20.

Der Temperaturfühler 210 kann im einfachsten Fall zumindest mit einer wenigstens einen Schalter 260 umfassenden Partie des Schaltkreises 220 verbunden sein, wie in Fig. 1 dargestellt. Der wenigstens eine Schalter 260 wird bei einem einer von dem Temperaturfühler 210 erfassten Temperatur, die kleiner ist, als eine vorgegebene Schwellentemperatur von beispielsweise 0°C proportionalen Ausgangssignal von dem Temperaturfühler 210 derart geschaltet, dass die elektrischen Anschlüsse 250 der Schaltungsanordnung 200 bei Betrieb des Leuchtmittels 100 in Paaren und/oder in Gruppen zu zwei, drei, vier oder mehr elektrischen Anschlüssen 250 parallel geschaltet sind (Fig. 3). Der wenigstens eine Schalter 260 wird bei einem einer von dem Temperaturfühler 210 erfassten Temperatur, die größer ist, als eine vorgegebene Schwellentemperatur von beispielsweise 0°C proportionalen Ausgangssignal von dem Temperaturfühler 210 derart geschaltet, dass die bei einem einer von dem Temperaturfühler 210 erfassten Temperatur, die kleiner ist, als eine vorgegebene Schwellentemperatur von beispielsweise 0°C proportionalen Ausgangssignal bei Betrieb des Leuchtmittels 100 in Paaren und/oder in Gruppen zu zwei, drei, vier oder mehr elektrischen Anschlüssen 250 parallel geschalteten elektrischen Anschlüsse 250 der Schaltungsanordnung 200 dann paarweise und/oder in Gruppen zu zwei, drei, vier oder mehr elektrischen Anschlüssen 250 in Serie geschaltet sind (Fig. 2).

Alternativ oder zusätzlich kann der Schaltkreis 220 einen Proportionalregler umfassen, der bei Betrieb des Leuchtmittels 100 in Abhängigkeit von der vom Temperaturfühler 210 erfassten Temperatur unterhalb einer vorgegebenen Schwellentemperatur um so mehr elektrische Anschlüsse 250 parallel schaltet, je tiefer die erfasste Temperatur unterhalb der vorgegebenen Schwellentemperatur liegt, und/oder der oberhalb einer vorgegebenen Schwellentemperatur um so mehr elektrische Anschlüsse 250 in Serie zueinander schaltet, je höher die erfasste Temperatur oberhalb der vorgegebenen Schwellentemperatur liegt.

Die Schaltungsanordnung 200 und/oder der Schaltkreis 220 können ein oder mehrere Proportional- und/oder Differential- und/oder Integralregler, so genannte P-, D-, I-Glieder und/oder Schalter 260 umfassen, um eine gewünschte Regelcharakteristik zu erhalten.

OLEDs 20 werden, wie auch LEDs, stromgetrieben. Eine einfache Spannungserhöhung ist in der Regel ohne aufwändige Spannungsumwandlung, wozu die im Kraftfahrzeug vorherrschende Gleichspannung in Wechselspannung und wieder zurück umgewandelt werden muss, nicht möglich, da der zur Verfügung stehende Spannungsbereich im Automobilbereich nicht ohne weiteres dafür ausreicht, die an OLEDs 20 anliegende Spannung nach belieben zu erhöhen.

Mit Hilfe eines Leuchtmittels 100 mit einer Schaltungsanordnung 200, die auch einen oder mehrere Temperaturfühler 210 umfasst, können OLEDs 20 abhängig von der von mindestens einem Temperaturfühler 210 erfassten Temperatur im Stromkreis unterschiedlich verschaltet werden, wobei zwischen paralleler und serieller Verschaltung zweier und/oder mehrerer elektrischer Anschlüsse 250 hin- und her geschaltet wird. Somit wird durch die Serienschaltung (Fig. 2) zweier beispielsweise unterhalb einer vorgegebenen Schwellentemperatur von beispielsweise 0°C parallel geschalteter elektrischer Anschlüsse 250 die in der Parallelschaltung (Fig. 3) an beiden elektrischen Anschlüssen 250 anliegende Gesamtspannung U in der Serienschaltung (Fig. 2) auf die beiden elektrischen Anschlüsse 250 aufgeteilt.

Dies wird nötig, da OLEDs 20 bei konstanter Stromaufnahme bei tiefen Temperaturen von z. B. -40 °C eine signifikant höhere Spannungsaufnahme haben, als z. B. bei 0 °C.

Das Leuchtmittel 100 kann zusätzlich einen Träger 10 umfassen, an dem mindestens eine OLED 20 des Leuchtmittels 100 angeordnet ist (Fig. 4).

Sich durch den Träger 10 ergebende Vorteile sind eine einwandfreie spannungsfreie Halterung von OLEDs 20 auf dem Träger 10, ohne deren Lichtabstrahlung zu behindern, einhergehend mit einer thermischen Ankopplung, um beim Betrieb der OLED 20 entstehende Wärme optimal abführen zu können.

Wenigstens ein beispielsweise zumindest in wärmeleitendem Kontakt mit zumindest einer OLED 20 stehender Temperaturfühler 210 kann auf und/oder in dem Träger 10 und/oder zwischen dem Träger 10 und mindestens einer OLED 20 und/oder auf einer mindestens einer OLED 20 abgewandten Seite des Trägers 10 angeordnet sein.

Der Träger 10 kann darüber hinaus elektrische Kontakte aufweisen. Mit den elektrischen Kontakten kann die mindestens eine vom Träger 10 gehaltene OLED 20 mit Strom beaufschlagt werden.

Solche elektrischen Kontakte können darüber hinaus der elektrischen Kontaktierung des Temperaturfühlers 210 und der Schaltung 220 der Schaltungsanordnung 200 dienen.

Beispielsweise kann der Träger 10 als im MID-Verfahren (MID; Molded Interconnect Device) spritzgegossener Schaltungsträger ausgeführt sein. Alternativ oder zusätzlich kann eine Platine am Träger 10 befestigt sein und mindestens eine OLED 10 des Leuchtmittels 100 mittels Kabelverbindung und/oder Flexplatine elektrisch kontaktiert sein.

Das Leuchtmittel 100 kann wie erwähnt in einer beispielsweise in Fig. 4 dargestellten Kraftfahrzeugleuchte 01 beherbergt sein. Zur Beherbergung kann vorgesehen sein, dass mindestens eine OLED 20 des Leuchtmittels 100 in eine Lichtscheibe 03 und/oder eine Rückwand 06 und/oder in ein anderes Bauteil der Kraftfahrzeugleuchte 01 integriert ist.

Die Kraftfahrzeugleuchte 01 kann einen von einem Leuchtengehäuse 02 und wenigstens einer Lichtscheibe 03 zumindest zum Teil umschlossenen Leuchteninnenraum 04 aufweisen.

Die Lichtscheibe 03 der Kraftfahrzeugleuchte 01 kann tiefgezogen oder im Spritzgussverfahren hergestellt sein. Die Lichtscheibe 03 der Kraftfahrzeugleuchte 01 ist bevorzugt aus Kunststoff hergestellt.

Die Beherbergung des Leuchtmittels 100 und/oder zumindest einer OLED 20 des Leuchtmittels 100 kann in dem gegebenenfalls vorgesehenen Leuchteninnenraum 04 vorgesehen sein.

In dem Leuchteninnenraum 03 können eine oder mehrere Lichtquellen:
- des selben Leuchtmittels 100 beherbergt sein, wie eines zuvor beschriebenen Leuchtmittels 100, und/oder
- mindestens eines zur Erfüllung der selben Lichtfunktion vorgesehenen Leuchtmittels beherbergt sein, wie der von einem zuvor beschriebenen Leuchtmittel 100 erfüllten, und/oder
- mindestens eines weiteren Leuchtmittels beherbergt sein, als eines zuvor beschriebenen Leuchtmittels 100, und/oder
- mindestens eines zur Erfüllung einer anderen Lichtfunktion vorgesehenen Leuchtmittels beherbergt sein, als der von einem zuvor beschriebenen Leuchtmittel 100 erfüllten.

Der gegebenenfalls vorgesehene, von dem Leuchtengehäuse 02 und zumindest einer Lichtscheibe 03 zumindest zum Teil umschlossene Leuchteninnenraum 04 der Kraftfahrzeugleuchte 01 beherbergt vorzugsweise eine Blende 05.

Die Blende 05 teilt den Leuchteninnenraum 04 vorzugsweise in einen durch die Lichtscheibe 03 hindurch gesehen vor der Blende 05 liegenden und durch die Lichtscheibe 03 hindurch einsehbaren, ersten Bereich 41 und in einen durch die Lichtscheibe 03 hindurch gesehen hinter der Blende 05 liegenden und durch die Lichtscheibe 03 hindurch nicht einsehbaren, zweiten Bereich 42 ein.

Ein gegebenenfalls vorgesehener Träger 10 zumindest eines von der Kraftfahrzeugleuchte 01 beherbergten Leuchtmittels 100 kann vorzugsweise an einer durch die Blende 05 beispielsweise von einer Vorderseite 51 der Blende 05 zu einer Rückseite 52 der Blende 05 hindurchreichenden Partie 30 elektrische Kontakte, aufweisen. Mit den elektrischen Kontakten kann wenigstens die zumindest eine vom Träger 10 gehaltene OLED 20 des Leuchtmittels 100 mit Strom versorgt werden.

Die Kraftfahrzeugleuchte 01 kann mehrere beim Blick von außerhalb des Leuchteninnenraums 04 durch die Lichtscheibe 03 hindurch gesehen räumlich neben- und/oder hintereinander angeordnete, zuvor beschriebene Leuchtmittel 100 aufweisen.

Alternativ oder zusätzlich kann die Kraftfahrzeugleuchte 01 mindestens ein zuvor beschriebenes Leuchtmittel 100 aufweisen, sowie mindestens ein zusätzliches in dem Leuchteninnenraum 04 beherbergtes und zur Erfüllung zumindest der selben oder einer weiteren Lichtfunktion der Kraftfahrzeugleuchte 01 vorgesehenes Leuchtmittel mit wenigstens einer Lichtquelle.

Zumindest eine Lichtquelle eines zur Erfüllung zumindest der selben oder einer weiteren Lichtfunktion der Kraftfahrzeugleuchte 01 vorgesehenen, zusätzlichen Leuchtmittels kann beim Blick von außerhalb des Leuchteninnenraums 04 durch die Lichtscheibe 03 hindurch gesehen hinter mindestens einer beispielsweise von einem Träger 10 im Leuchteninnenraum 04 gehaltenen OLED 20 eines Leuchtmittels 100 mit mindestens zwei OLEDs 20 als Lichtquellen angeordnet sein, so dass wenigstens eine OLED 20 des Leuchtmittels 100 im direkten Strahlengang des von der zumindest einen Lichtquelle des zur Erfüllung zumindest der selben oder einer weiteren Lichtfunktion der Kraftfahrzeugleuchte 01 vorgesehenen, zusätzlichen Leuchtmittels zur Lichtscheibe 03 liegt.

Ein mindestens eine OLED 20 des Leuchtmittels 100 mit mindestens zwei OLEDs 20 als Lichtquellen im Leuchteninnenraum 04 haltender Träger 10 des Leuchtmittels 100 kann mindestens eine beispielsweise zentrale Lichtöffnung beispielsweise für von einer beim Blick durch eine Lichtscheibe 03 einer Kraftfahrzeugleuchte 01 hindurch gesehen hinter dem Träger 10 angeordneten Lichtquelle eines zur Erfüllung zumindest der selben oder einer weiteren Lichtfunktion der Kraftfahrzeugleuchte 01 vorgesehenen, zusätzlichen, beispielsweise mit einem zuvor beschriebenen Leuchtmittel 100 identischen Leuchtmittels abgestrahltes Licht aufweisen.

Durch das Unterbringen mehrere OLEDs 20 in einer Kraftfahrzeugleuchte 01 kann es zu gegenseitigen Abschattungen deren leuchtender Flächen kommen, was zur Folge hat, das einzelne Winkelbereiche eine zu geringe Lichtstärke aufweisen in Bezug auf die beispielsweise gesetzlich geforderten, von einer Lichtverteilung vorgegebenen Lichtwerte. Durch beispielsweise eine oder mehrere zentrale Lichtöffnungen zumindest in einem oder mehreren gegebenenfalls vorgesehenen Trägern 10 der vorderen, der Lichtscheibe näheren Leuchtmitteln 100 mehrerer beim Blick von außerhalb des Leuchteninnenraums 04 durch die Lichtscheibe 03 hindurch gesehen räumlich neben- und/oder hintereinander angeordneter, zuvor beschriebener oder unterschiedlicher Leuchtmittel 100 kann dieser gegenseitigen Abschattung zur Erhöhung der Lichtwerte in einzelnen Winkelbereichen entgegengewirkt werden.

Eine gegebenenfalls in einem Träger 10 vorgesehene, beispielsweise zentrale Lichtöffnung kann zumindest zum Teil von einer OLED 20 abgedeckt sein.

Zumindest zwei von mindestens zwei Lichtfunktionen der Kraftfahrzeugleuchte 01 können unterschiedliche Lichtfarben aufweisen.

Wichtig ist hervorzuheben, dass die Kraftfahrzeugleuchte 01 zusätzlich zu der durch die OLEDs 20 des mit diesen als Lichtquellen ausgestatteten Leuchtmittels 100 zu erfüllenden Lichtfunktion über mindestens eine konventionell vermittels beispielsweise eines oder mehrerer beispielsweise in einer separaten Reflektorkammer untergebrachten Leuchtmittels und/oder eines Lichtleiters verwirklichte, zusätzliche Lichtfunktion verfügen kann. Bei dieser mindestens einen zusätzlichen Lichtfunktion kann es sich beispielsweise um eine solche Lichtfunktion handeln, deren Lichtwerte und/oder deren gesetzliche Vorschriften vermittels flächiger Lichtquellen wie mehrerer OLEDs 20 nur unter hohem Aufwand zu erfüllen sind.

Alternativ oder zusätzlich können eine oder mehrere Lichtfunktionen unabhängig von der Kraftfahrzeugleuchte 01 untergebracht sein. Beispielsweise können eine der Erfüllung einer Nebelschlusslichtfunktion dienende Nebelschlussleuchte und/oder ein der Erfüllung einer Rückfahrlichtfunktion dienender Rückfahrscheinwerfer zusammen in einem Modul der Kraftfahrzeugleuchte 01 örtlich ausgelagert sein, während sich in einem anderen Bereich der Kraftfahrzeugleuchte 01 die verbleibenden Lichtfunktionen konzentrieren. Ein Grund hierfür kann beispielsweise sein, dass die Nebelschlusslichtfunktion einen Mindestabstand zum Bremslichtfunktion aufgrund gesetzlicher Vorgaben einhalten muss. Durch diese Abtrennung ist dann zusätzlich eine größere Gestaltungsfreiheit gegeben.

Sowohl ein beschriebenes Leuchtmittel 100, als auch eine mit mindestens einem solchen Leuchtmittel 100 ausgestattete Kraftfahrzeugleuchte 01 erlauben die Durchführung eines Verfahrens zum Betrieb mindestens eines Leuchtmittels 100 mit wenigstens zwei OLEDs 20 als Lichtquellen und/oder einer mit mindestens einem Leuchtmittel 100 mit wenigstens zwei OLEDs 20 als Lichtquellen ausgestatteten Kraftfahrzeugleuchte 01, welches Verfahren vorsieht, unterhalb mindestens einer vorgegebenen Schwellentemperatur von beispielsweise 0°C wenigstens zwei OLEDs 20 des Leuchtmittels 100 beim Betrieb des Leuchtmittels 100 parallel zu schalten, bis die bei Betrieb des Leuchtmittels 100 parallel betriebenen bzw. parallel geschalteten OLEDs 20 wenigstens sich selbst und/oder eine diese umgebende Umgebung auf eine Temperatur gleich oder oberhalb einer vorgegebenen Schwellentemperatur erwärmt haben, und ab und/oder oberhalb einer vorgegebenen, beispielsweise mit der zuvor erwähnten Schwellentemperatur identischen Schwellentemperatur jeweils mindestens zwei OLEDs 20 in Serie zu schalten, beispielsweise die OLEDs 20 paarweise oder in Gruppen zu zwei, drei, vier oder mehr OLEDs 20 in Serie zu schalten.

Das Verfahren kann einzelne Merkmale oder eine beliebige Kombination von zwei oder mehreren Merkmalen eines zuvor beschriebenen Leuchtmittels 100 oder einer zuvor oder nachfolgend noch beschriebenen Schaltungsanordnung 200 oder einer mit mindestens einem solchen Leuchtmittel 100 ausgestatteten, zuvor beschriebenen Kraftfahrzeugleuchte 01 nebst einer oder mehrerer der beschriebenen und/oder getroffenen Maßnahmen zur Schaltung dessen als OLED 20 ausgeführter, via elektrischer Anschlüsse 250 einer Schaltungsanordnung 200 des Leuchtmittels 100 bei dessen Betrieb mit Strom versorgten Lichtquellen und/oder einer oder mehrerer in Verbindung mit einer Schaltungsanordnung 200 nachfolgend noch beschriebenen Maßnahmen und/oder Merkmale zur Verschaltung deren elektrischer Anschlüsse 250 aufweisen.

So kann das Verfahren beispielsweise auch auf eine Schaltungsanordnung 200 zur Stromversorgung mehrerer elektrischer Verbraucher, beispielsweise OLEDs 20 angewandt werden, wobei die an den elektrischen Verbrauchern zu deren Stromversorgung anliegende Spannung temperaturabhängig in beispielsweise zwei, drei vier oder mehr, bis zu einer der Anzahl der unabhängig voneinander stromversorgten elektrischen Verbrauchern entsprechenden Zahl von diskreten Stufen angepasst wird, indem die unabhängig voneinander stromversorgten elektrischen Verbraucher unter- oder oberhalb einer vorgegebenen Schwellentemperatur paarweise oder in Gruppen zu zwei, drei, vier oder mehr elektrischen Verbrauchern, oder alle parallel oder in Serie geschaltet sind, und indem die unabhängig voneinander stromversorgten elektrischen Verbraucher ober- oder unterhalb einer vorgegebenen Schwellentemperatur paarweise oder in Gruppen zu zwei, drei, vier oder mehr elektrischen Verbrauchern, oder alle entsprechend umgekehrt in Serie oder parallel geschaltet sind.

Eine entsprechende, in Fig. 1 ganz oder in Teilen dargestellte Schaltungsanordnung 200 zur Stromversorgung mehrerer elektrischer Verbraucher beispielsweise in Form von OLEDs 20 ist beispielsweise in einem Leuchtmittel 100 und/oder in einer Kraftfahrzeugleuchte 01 einsetzbar. Die Schaltungsanordnung 200 ist mit mindestens einem Temperaturfühler 210 zur Erfassung wenigstens einer Temperatur, beispielsweise einer Umgebungstemperatur, und mindestens zwei getrennten elektrischen Anschlüssen 250 für jeweils mindestens einen elektrischen Verbraucher, beispielsweise je mindestens eine OLED 20 ausgestattet. Die Schaltungsanordnung 200 umfasst darüber hinaus Schaltungsmittel, beispielsweise in Form eines Schaltkreises 220 und/oder umfassend einen Schaltkreis 220 und/oder von einem Schaltkreis 220 umfasst, mit denen zumindest ein Teil der elektrischen Anschlüsse 250, beispielsweise alle, paarweise oder in Gruppen zu drei, vier oder mehr Anschlüssen, oberhalb oder unterhalb wenigstens einer vorgegebenen Schwellentemperatur in Serie schaltbar bzw. geschaltet sind und/oder unterhalb oder oberhalb wenigstens einer vorgegebenen Schwellentemperatur parallel schaltbar bzw. geschaltet sind.

Mehrere an einen elektrischen Anschluss 250 angeschlossene elektrische Verbraucher, wie beispielsweise OLEDs 20 können dabei parallel und/oder in Serie geschaltet sein.

Die Schaltungsanordnung 200 kann bei einer von dem Temperaturfühler 210 erfassten Temperatur, die oberhalb wenigstens einer vorgegebenen Schwellentemperatur liegt, ein oder mehrere Paare und/oder Gruppen von in Serie geschalteten elektrischen Anschlüssen 250 aufweisen, wobei mehrere Paare und/oder Gruppen von in Serie geschalteten elektrischen Anschlüssen 250 elektrisch parallel geschaltet sein können.

Die Schaltungsanordnung 200 kann unterhalb wenigstens einer von dem Temperaturfühler 210 erfassten Temperatur, die oberhalb wenigstens einer vorgegebenen Schwellentemperatur liegt, ein oder mehrere Paare und/oder Gruppen von parallel geschalteten elektrischen Anschlüssen 250 aufweisen, wobei mehrere Paare und/oder Gruppen von parallel geschalteten elektrischen Anschlüssen 250 elektrisch parallel geschaltet sein können.

Die Erfindung ist insbesondere im Bereich der Herstellung von Kraftfahrzeugleuchten gewerblich anwendbar.

### Bezugszeichenliste

- 01: Kraftfahrzeugleuchte
- 02: Leuchtengehäuse
- 03: Lichtscheibe
- 04: Leuchteninnenraum
- 05: Blende
- 06: Rückwand
- 10: Träger
- 20: OLED
- 30: durch die Blende 05 hindurchreichende Partie des Trägers
- 41: erster Bereich des Leuchteninnenraums 04, vor der Blende 05 liegend
- 42: zweiter Bereich des Leuchteninnenraums 04, hinter der Blende 05 liegend
- 51: Vorderseite der Blende 05
- 52: Rückseite der Blende 05
- 100: Leuchtmittel
- 200: Schaltungsanordnung
- 210: Temperaturfühler
- 220: Schaltkreis
- 250: elektrischer Anschluss
- 260: Schalter

- U: elektrische Gesamtspannung

## Patentansprüche

1. Leuchtmittel (100) umfassend mindestens zwei OLEDs (20) als Lichtquellen, umfassend eine Schaltungsanordnung (200) zur Stromversorgung der OLEDs (20) bei Betrieb des Leuchtmittels (100) mit:
- wenigstens zwei elektrischen Anschlüssen (250) für jeweils mindestens eine OLED (20),
- mindestens einem Temperaturfühler (210), welcher ein einer von ihm erfassten Temperatur proportionales Ausgangssignal aufweist,
- einem vom Ausgangssignal des Temperaturfühlers (210) gesteuerten Schaltkreis (220), welcher die elektrische Verschaltung der elektrischen Anschlüsse der Schaltungsanordnung in Abhängigkeit von der vom Temperaturfühler (210) erfassten Temperatur derart steuert, dass die Schaltungsanordnung (200) bei Betrieb des Leuchtmittels (100):
- bei einem Ausgangssignal proportional einer vom Temperaturfühler (210) erfassten Temperatur, die höher ist, als eine vorgegebene Schwellentemperatur, zumindest zwei OLEDs (20) in Serie zueinander verschaltet,
- bei einem Ausgangssignal proportional einer vom Temperaturfühler (210) erfassten Temperatur, die niedriger ist, als die Schwellentemperatur, die oberhalb der Schwellentemperatur in Serie zueinander verschalteten OLEDs (20) parallel zueinander verschaltet,
wobei zumindest ein Temperaturfühler (210) unmittelbar auf einer der mindestens zwei OLED (20) angeordnet ist.

2. Leuchtmittel nach Anspruch 1, wobei an wenigstens einen der elektrischen Anschlüsse (250) mehrere OLEDs (20) parallel und/oder in Serie geschaltet angeschlossen sind.

3. Leuchtmittel nach Anspruch 1 oder 2, wobei mindestens zwei Gruppen zu jeweils wenigstens zwei elektrischen Anschlüssen (250) vorgesehen sind, welche innerhalb ihrer jeweiligen Gruppe:
- bei einem Ausgangssignal proportional einer vom Temperaturfühler (210) erfassten Temperatur die höher ist, als die Schwellentemperatur, in Serie zueinander verschaltet sind, und
- bei einem Ausgangssignal proportional einer vom Temperaturfühler (210) erfassten Temperatur, die niedriger ist, als die Schwellentemperatur, parallel zueinander verschaltet sind.

4. Leuchtmittel nach Anspruch 3, wobei wenigstens zwei Gruppen zu jeweils wenigstens zwei elektrischen Anschlüssen (250) parallel oder in Serie zueinander angeordnet sind.

5. Leuchtmittel nach einem der voranstehenden Ansprüche, wobei bei einem Ausgangssignal proportional einer vom Temperaturfühler (210) erfassten Temperatur unterhalb der Schwellentemperatur alle elektrischen Anschlüsse (250) der Schaltungsanordnung (200) parallel zueinander geschaltet sind.

6. Leuchtmittel nach einem der voranstehenden Ansprüche, wobei mehrere Schwellentemperaturen in Anhängigkeit von der Anzahl der vorhandenen elektrischen Anschlüsse (250) des Leuchtmittels (100) vorgegeben sind, wobei bei einem Ausgangssignal proportional einer vom Temperaturfühler (210) erfassten Temperatur oberhalb einer höchsten Schwellentemperatur alle elektrischen Anschlüsse (250) zumindest einer Gruppe von elektrischen Anschlüssen in Serie geschaltet sind, und alle elektrischen Anschlüsse zumindest einer Gruppe von elektrischen Anschlüssen (250), welche oberhalb der höchsten Schwellentemperatur in Serie geschaltet sind, bei einem Ausgangssignal proportional einer vom Temperaturfühler (210) erfassten Temperatur unterhalb einer niedrigsten Schwellentemperatur parallel geschaltet sind.

7. Leuchtmittel nach einem der voranstehenden Ansprüche, wobei der Schaltkreis (220) ein oder mehrere Proportional- und/oder Differential- und/oder Integralregler (P-, D-, I-Glieder) und/oder Schalter umfasst.

8. Leuchtmittel nach einem der voranstehenden Ansprüche, wobei das Leuchtmittel (100) zusätzlich einen Träger (10) umfasst, an dem mindestens eine OLED (20) des Leuchtmittels (100) angeordnet ist.

9. Kraftfahrzeugleuchte (01) mit wenigstens einem zur Erfüllung wenigstens einer Lichtfunktion der Kraftfahrzeugleuchte (01) vorgesehenen Leuchtmittel (100) mit wenigstens zwei OLEDs (20) als Lichtquellen, **gekennzeichnet durch** ein Leuchtmittel (100) nach einem der voranstehenden Ansprüche.

10. Kraftfahrzeugleuchte nach Anspruch 9, wobei in einem von einem Leuchtengehäuse (02) und wenigstens einer Lichtscheibe (03) zumindest zum Teil umschlossenen Leuchteninnenraum (04) eine oder mehrere Lichtquellen:
- des selben Leuchtmittels (100) beherbergt sind, wie das Leuchtmittel (100), nach einem der Ansprüche 1 bis 8. und/oder
- mindestens eines zur Erfüllung der selben Lichtfunktion vorgesehenen Leuchtmittels beherbergt sind, wie der von dem Leuchtmittel (100) nach einem der Ansprüche 1 bis 8 erfüllten, und/oder
- mindestens eines weiteren Leuchtmittels beherbergt sind, als dem Leuchtmittel (100) nach einem der Ansprüche 1 bis 8, und/oder
- mindestens eines zur Erfüllung einer anderen Lichtfunktion vorgesehenen Leuchtmittels beherbergt sind, als der von dem Leuchtmittel (100) nach einem der Ansprüche 1 bis 8 erfüllten.

11. Kraftfahrzeugleuchte nach Anspruch 9 oder 10, wobei sie als Heckleuchte oder als in einem Außenrückblickspiegel untergebrachte Wiederholblinkleuchte ausgeführt ist.

12. Verfahren zum Betrieb mindestens eines Leuchtmittels (100) mit wenigstens zwei OLEDs (20) als Lichtquellen nach einem der Ansprüche 1 bis 8 und/oder einer Kraftfahrzeugleuchte (01) mit mindestens einem Leuchtmittel (100) mit wenigstens zwei OLEDs (20) als Lichtquellen nach einem der Ansprüche 9 bis 11 , wobei bei einem Ausgangssignal proportional einer vom Temperaturfühler (210) erfassten Temperatur unterhalb mindestens einer vorgegebenen Schwellentemperatur wenigstens zwei OLEDs (20) des Leuchtmittels (100) beim Betrieb des Leuchtmittels (100) parallel geschaltet werden, bis die parallel geschalteten OLEDs (20) wenigstens sich selbst und/oder eine diese umgebende Umgebung auf eine Temperatur oberhalb einer vorgegebenen Schwellentemperatur erwärmt haben, und ab und/oder oberhalb der Schwellentemperatur jeweils mindestens zwei OLEDs (20) in Serie geschaltet werden.

## Claims

1. A lighting means (100), comprising at least two OLEDs (20) as light sources, comprising a circuit configuration (200) for the power supply of the OLEDs (20) during operation of the lighting means (100), with:
- at least two electrical connections (250) for in each case at least one OLED (20);
- at least one temperature sensor (210), which has an output signal that is proportional to a temperature detected by said temperature sensor (210);
- a circuit (220) controlled by the output signal of the temperature sensor (210), which circuit (220) controls the electrical switching of the electrical connections of the circuit configuration based on the temperature detected by the temperature sensor (210) in such a manner that, during the operation of the lighting means (100), the circuit configuration (200) switches:
- at least two OLEDs (20) in series to each other in the case of an output signal that is proportional to a temperature detected by the temperature sensor (210) with the temperature being higher than a specified threshold temperature;
- at least two OLEDs (20) switched in series to each other above the threshold temperature parallel to each other in the case of an output signal that is proportional to a temperature detected by the temperature sensor (210) with the temperature being lower than the threshold temperature;
wherein at least one temperature sensor (210) is arranged immediately on one of the at least two OLEDs (20).

2. The lighting means according to claim 1, wherein a plurality of OLEDs (20) are connected parallel-connected and/or series-connected to at least one of the electrical connections (250).

3. The lighting means according to claim 1 or 2, wherein at least two groups of in each case at least two electrical connections (250) are provided, which electrical connections (250) are switched within their particular group:
- in series to each other in the case of an output signal that is proportional to a temperature detected by the temperature sensor (210) with the temperature being higher than the threshold temperature; and
- parallel to each other in the case of an output signal that is proportional to a temperature detected by the temperature sensor (210) with the temperature being lower than the threshold temperature.

4. The lighting means according to claim 3, wherein at least two groups of in each case at least two electrical connections (250) are arranged parallel or in series to each other.

5. The lighting means according to one of the previous claims, wherein all electrical connections (250) of the circuit configuration (200) are parallel-connected to each other in the case of an output signal that is proportional to a temperature detected by the temperature sensor (210) with the temperature below the threshold temperature.

6. The lighting means according to one of the previous claims, wherein a plurality of threshold temperatures are specified based on the number of existing electrical connections (250) of the lighting means (100); wherein all electrical connections (250) of at least one group of electrical connections are series-connected in the case of an output signal that is proportional to a temperature detected by the temperature sensor (210) with the temperature above a highest threshold temperature; and all electrical connections of at least one group of electrical connections (250), which are series-connected above the highest threshold temperature, are parallel-connected in the case of an output signal that is proportional to a temperature detected by the temperature sensor (210) with the temperature below a lowest threshold temperature.

7. The lighting means according to one of the previous claims, wherein the circuit (220) comprises one or more proportional, derivative, and/or integral controllers (P, D, I elements) and/or switches.

8. The lighting means according to one of the previous claims, wherein the lighting means (100) additionally comprises a carrier (10) on which at least one OLED (20) of the lighting means (100) is arranged.

9. A motor vehicle lamp (01) with at least one lighting means (100) provided for fulfilling at least one light function of the motor vehicle lamp (01) with at least two OLEDs (20) as light sources, **characterised by** a lighting means (100) according to one of the previous claims.

10. The motor vehicle lamp according to claim 9, wherein, accommodated in a lamp interior (04) that is at least partly enclosed by a lamp housing (02) and by at least one light lens (03), are one or more light sources:
- of the same lighting means (100) as the lighting means (100) according to one of the claims 1 to 8 and/or
- of at least one lighting means provided for fulfilling the same light function as that fulfilled by the lighting means (100) according to one of the claims 1 to 8 and/or
- of at least one lighting means in addition to the lighting means (100) according to one of the claims 1 to 8 and/or
- of at least one lighting means provided for fulfilling a different light function than that fulfilled by the lighting means (100) according to one of the claims 1 to 8.

11. The motor vehicle lamp according to claim 9 or 10, wherein the motor vehicle lamp is designed to be a taillight or a flashing indicator lamp accommodated in an external rearview mirror.

12. A method used to operate at least one lighting means (100) with at least two OLEDs (20) as light sources according to one of the claims 1 to 8 and/or used to operate a motor vehicle lamp (01) with at least one lighting means (100) with at least two OLEDs (20) as light sources according to one of the claims 9 to 11, wherein at least two OLEDs (20) of the lighting means (100) are parallel-connected during operation of the lighting means (100) in the case of an output signal that is proportional to a temperature detected by the temperature sensor (210) with the temperature below at least one specified threshold temperature, until the parallel-connected OLEDs (20) have heated up at least themselves and/or a vicinity surrounding them to a temperature above a specified threshold temperature, and in each case at least two OLEDs (20) are series-connected from and/or above the threshold temperature.

## Revendications

1. Moyen lumineux (100) comprenant au moins deux DELO (20) en tant que sources de lumière, comprenant un agencement de circuit (200) pour alimenter en courant les DELO (20) lors du fonctionnement du moyen lumineux (100), avec:
- au moins deux bornes électriques (250) pour respectivement au moins une DELO (20),
- au moins un capteur de température (210) qui présente un signal de sortie proportionnel à une température détectée par lui,
- un circuit (220) qui est commandé par le signal de sortie du capteur de température (210) et qui commande la connexion électrique des bornes électriques de l'agencement de circuit en fonction de la température détectée par le capteur de température (210), de telle sorte que, lors du fonctionnement du moyen lumineux (100), l'agencement de circuit (200):
- connecte en série l'une avec l'autre au moins deux DELO (20) dans le cas d'un signal de sortie proportionnel à une température détectée par le capteur de température (210), qui est supérieure à une température de seuil prédéterminée,
- connecte en parallèle les DELO (20) connectées en série les unes avec les autres au-dessus de la température de seuil, dans le cas d'un signal de sortie proportionnel à une température détectée par le capteur de température (210), qui est inférieure à la température de seuil,
dans lequel au moins un capteur de température (210) est disposé directement sur l'une desdites au moins deux DELO (20).

2. Moyen lumineux selon la revendication 1, dans lequel plusieurs DELO (20) sont raccordées à l'une au moins des bornes électriques (250) en étant connectées en parallèle et/ou en série.

3. Moyen lumineux selon la revendication 1 ou 2, dans lequel au moins deux groupes ayant chacun au moins deux bornes électriques (250) sont prévus, lesquelles, au sein de leur groupe respectif,
- sont connectées en série l'une avec l'autre dans le cas d'un signal de sortie proportionnel à une température détectée par le capteur de température (210), qui est supérieure à ladite température de seuil, et
- sont connectées en parallèle l'une à l'autre dans le cas d'un signal de sortie proportionnel à une température détectée par le capteur de température (210), qui est inférieure à ladite température de seuil.

4. Moyen lumineux selon la revendication 3, dans lequel au moins deux groupes ayant chacun au moins deux bornes électriques (250) sont agencés en parallèle ou en série les uns par rapport aux autres.

5. Moyen lumineux selon l'une quelconque des revendications précédentes, dans lequel, dans le cas d'un signal de sortie proportionnel à une température détectée par le capteur de température (210), qui est inférieure à ladite température de seuil, l'ensemble des bornes électriques (250) de l'agencement de circuit (200) sont connectées en parallèle les unes aux autres.

6. Moyen lumineux selon l'une quelconque des revendications précédentes, dans lequel plusieurs températures de seuil sont prédéterminées en fonction du nombre de bornes électriques (250) existantes du moyen lumineux (100), dans lequel, dans le cas d'un signal de sortie proportionnel à une température détectée par le capteur de température (210), qui est supérieure à une température de seuil la plus élevée, l'ensemble des bornes électriques (250) d'au moins un groupe de bornes électriques sont connectées en série, et l'ensemble des bornes électriques d'au moins un groupe de bornes électriques (250) qui sont connectées en série au-dessus de la température de seuil la plus élevée, sont connectées en parallèle dans le cas d'un signal de sortie proportionnel à une température détectée par le capteur de température (210), qui est inférieure à une température de seuil la plus basse.

7. Moyen lumineux selon l'une quelconque des revendications précédentes, dans lequel le circuit (220) comprend un ou plusieurs régulateurs proportionnels et/ou différentiels et/ou intégraux (éléments P, D, I) et/ou interrupteurs.

8. Moyen lumineux selon l'une quelconque des revendications précédentes, dans lequel le moyen lumineux (100) comprend en sus un support (10) sur lequel est disposée au moins une DELO (20) du moyen lumineux (100).

9. Lampe de véhicule automobile (01) comprenant au moins un moyen lumineux (100) qui est prévu pour remplir au moins une fonction de lumière de la lampe de véhicule automobile (01) et présente au moins deux DELO (20) en tant que sources de lumière, **caractérisé par** un moyen lumineux (100) selon l'une quelconque des revendications précédentes.

10. Lampe de véhicule automobile selon la revendication 9, dans laquelle dans un volume intérieur de lampe (04) qui est entouré au moins en partie d'un boîtier de lampe (02) et d'au moins une glace (03) est/sont logée(s) une ou plusieurs sources de lumière:
- du même moyen lumineux (100), que le moyen lumineux (100), selon l'une quelconque des revendications 1 à 8, et/ou
- d'au moins un moyen lumineux qui est prévu pour remplir la même fonction de lumière que celle remplie par le moyen lumineux (100) selon l'une quelconque des revendications 1 à 8, et/ou
- d'au moins un autre moyen lumineux que le moyen lumineux (100) selon l'une quelconque des revendications 1 à 8, et/ou
- d'au moins un moyen lumineux qui est prévu pour remplir une autre fonction de lumière que celle remplie par le moyen lumineux (100) selon l'une quelconque des revendications 1 à 8.

11. Lampe de véhicule automobile selon la revendication 9 ou 10, dans laquelle elle est conçue en tant que feu arrière ou en tant que feu clignotant répétiteur qui est logé à l'intérieur d'un rétroviseur extérieur.

12. Procédé pour faire fonctionner au moins un moyen lumineux (100) comprenant au moins deux DELO (20) en tant que sources de lumière selon l'une quelconque des revendications 1 à 8 et/ou une lampe de véhicule automobile (01) ayant au moins un moyen lumineux (100) comprenant au moins deux DELO (20) en tant que sources de lumière selon l'une quelconque des revendications 9 à 11, dans lequel, dans le cas d'un signal de sortie proportionnel à une température détectée par le capteur de température (210), qui est inférieure à au moins une température de seuil prédéterminée, au moins deux DELO (20) du moyen lumineux (100) sont connectées en parallèle pendant le fonctionnement du moyen lumineux (100) jusqu'à ce que les DELO (20) connectées en parallèle aient chauffé au moins elles-mêmes et/ou un environnement qui les entoure à une température qui est supérieure à une température de seuil prédéterminée, et respectivement au moins deux DELO (20) sont connectées en série à partir et/ou au-dessus de ladite température de seuil.
